# EUROPEAN PATENT APPLICATION

(11) **EP 4 432 135 A1**
(43) Date of publication of application: **18.09.2024**
(21) Application number: 21966771.4
(22) Date of filing: 09.12.2021
(51) Int. Cl.: G06F 18/00, B60R 25/25, G06F 21/32

(54) **INFORMATION ENTRY METHOD AND APPARATUS, AND TRANSPORT VEHICLE**

(71) Applicant: Huawei Technologies Co., Ltd., Shenzhen, Guangdong 518129 (CN)
(72) Inventor: LIAO, Xiaofeng, Shenzhen, Guangdong 518129 (CN); ZHAO, Yaxi, Shenzhen, Guangdong 518129 (CN); WANG, Zhenyang, Shenzhen, Guangdong 518129 (CN); XU, Wenkang, Shenzhen, Guangdong 518129 (CN); TANG, Qiuyuan, Shenzhen, Guangdong 518129 (CN)
(74) Representative: Goddar, Heinz J.
(86) International application number: PCT/CN2021/136866
(87) International publication number: WO 2023/102849

(57) **Abstract**

This application provides an information recording method and apparatus, and a transportation means. The method includes: obtaining image information; displaying prompt information on a head-up display based on the image information, where the prompt information is used to guide a user to record facial information; and obtaining the facial information. Embodiments of this application help improve convenience of a user in recording a face, thereby helping improve user experience.

## Description

### TECHNICAL FIELD

This application relates to the field of human-computer interaction, and more specifically, to an information recording method and apparatus, and a transportation means.

### BACKGROUND

A biometric recognition technology is used for identity authentication based on a human biometric feature, and has been more widely used because of advantages of security, reliability, and accuracy. For example, fingerprint or facial recognition may be used to unlock a smart device (for example, a smartphone) or authenticate a user identity, to perform an operation like payment.

With development of vehicle intelligence, applying the biometric recognition technology to the field of intelligent vehicles has gradually become a trend. How to improve user experience for the biometric recognition technology in the field of intelligent vehicles has become a problem to be resolved.

### SUMMARY

This application provides an information recording method and apparatus, and a transportation means, to help improve convenience of recording information by a user in the transportation means. This helps improve user experience.

In this application, the transportation means may include one or more different types of transportation tools or movable objects that operate or move on land (for example, a highway, a road, or a railway), water surface (for example, a waterway, a river, or an ocean), or in space. For example, the transportation means may include a car, a bicycle, a motorcycle, a train, a subway, an airplane, a ship, an aircraft, a robot, and/or another type of transportation tool or movable object.

According to a first aspect, an information recording method is provided. The method includes: obtaining image information; displaying prompt information on a head-up display based on the image information, where the prompt information is used to guide a user to record facial information; and obtaining the facial information.

Because an apparatus (for example, a camera) for capturing the facial information in a cockpit of a transportation means (for example, a vehicle) and a display on which the facial information is displayed may not be in a same position, a line-of-sight direction in which the user looks to the camera and a line-of-sight direction in which the user looks to the display are different. As a result, the user cannot face the camera and the display at the same time. In this embodiment of this application, when the user records information, the prompt information for guiding the user to record the facial information is displayed on the head-up display, so that the user completes an information recording process based on the prompt information on the head-up display, without a need to take the camera and the display into consideration. This helps improve convenience of vehicle information recording, thereby improving user experience.

In some possible implementations, the prompt information may be used to guide the user to record the facial information.

With reference to the first aspect, in some implementations of the first aspect, the prompt information includes a face image, and the face image is determined based on the image information, or the face image is a face model.

In this embodiment of this application, the face image is displayed on the head-up display, so that the user can be guided to record the facial information in a face-to-face manner. This helps improve interaction experience of the user during facial information recording.

In some possible implementations, the image information may be content such as an image, a photo, or a video captured by the camera in the cockpit of the transportation means.

In some possible implementations, the face image may be a real-time image captured by the camera, or may be another image determined based on the image captured by the camera, for example, an image obtained by adjusting a face attitude angle in the image captured by the camera.

In some possible implementations, the face image may be content such as an image, a photo, or a video.

In some possible implementations, the face model may be a universal face model, for example, a same face model that may be stored in different vehicles; or the face model may be a face model constructed based on preset facial information in the vehicle. For example, the vehicle may construct a corresponding face model by using a three-dimensional contour in the preset facial information.

With reference to the first aspect, in some implementations of the first aspect, the displaying prompt information on a head-up display based on the image information includes: adjusting a face in the image information based on a face attitude angle in the image information, to obtain the face image; and displaying the face image on the head-up display.

In this embodiment of this application, because there is an angle difference between an installation position of the camera and a position of an image displayed on the head-up display, the face displayed on the head-up display has a specific deflection angle. The face is adjusted based on the face attitude angle in the image information, so that the user can view a front face image of the user on the head-up display. This resolves a problem of poor information recording interaction experience caused by the installation position of the camera, and helps improve interaction experience of the user during information recording.

In some possible implementations, before the adjusting a face in the image information based on a face attitude angle, to obtain the face image, the method further includes: determining that the face attitude angle is less than or equal to a first preset threshold.

In some possible implementations, the first preset threshold is determined based on the position of the camera and a display position of the head-up display.

In some possible implementations, the adjusting a face in the image information based on a face attitude angle, to obtain the face image includes: returning the face in the image information based on the face attitude angle, to obtain the face image.

With reference to the first aspect, in some implementations of the first aspect, the displaying prompt information on a head-up display based on the image information includes: adjusting a display region of the face image based on a distance between a face position in the image information and a first region for displaying the face, so that the face image is displayed in the first region.

In this embodiment of this application, the display region of the face image is adjusted to the first region, so that users with different heights and sitting postures can view face images in a target region in which an image is displayed on the head-up display. This helps improve interaction experience of the user during information recording.

In some possible implementations, the face position may include information about a face display region in the image information. For example, the vehicle may segment the facial information and background information (image information other than the facial information) in the image information by using an image segmentation technology, to obtain information about the face display region in the image information.

In some possible implementations, the face position may alternatively be located in a rectangular box in the image information. The rectangular box may be represented by coordinates of a plurality of key points. For example, the rectangular box may be represented by coordinates of a first key point and coordinates of a second key point. The first key point may be a point of intersection between a tangent line at an uppermost point of a face contour and a tangent line at a leftmost point of the face contour. The second key point may be a point of intersection between a tangent line at a bottommost point of the face contour and a tangent line at a rightmost point of the face contour.

With reference to the first aspect, in some implementations of the first aspect, the displaying prompt information on a head-up display based on the image information includes: displaying the prompt information on the head-up display based on the face attitude angle in the image information.

In this embodiment of this application, in combination of differences of different users such as heights and sitting postures, during information recording, a display angle at which the prompt information is displayed on the head-up display may be adjusted based on the face attitude angle in the image information. This helps ensure that the prompt information displayed on the head-up display appears directly in front of a face orientation of the user, thereby helping improve interaction experience of the user during information recording.

With reference to the first aspect, in some implementations of the first aspect, the displaying the prompt information on the head-up display based on the face attitude angle in the image information includes: determining a display angle of the prompt information based on the face attitude angle; and displaying the prompt information on the head-up display based on the display angle.

In some possible implementations, the display angle may be a deflection angle in a preset direction, and a value of the display angle may be determined based on the face attitude angle. For example, when the vehicle determines that the face attitude angle is 10 degrees (°) to the right, it may be determined that the prompt information appears in a direction of 10 degrees to the right in the preset direction. This ensures that the display angle of the prompt information corresponds to the face attitude angle, so that the prompt information appears directly in front of the face orientation.

In some possible implementations, the preset direction is a face orientation when the face attitude angle is 0 degrees.

With reference to the first aspect, in some implementations of the first aspect, the displaying prompt information on a head-up display based on the image information includes: displaying the prompt information on the head-up display based on a line-of-sight direction of human eyes in the image information.

In this embodiment of this application, in combination of the differences of the different users such as the heights and the sitting postures, during information recording, the display angle at which the prompt information is displayed on the head-up display may be adjusted based on the line-of-sight direction of the human eyes. This helps ensure that the human eyes of the user can directly look at the prompt information displayed on the head-up display, thereby helping improve interaction experience of the user during information recording.

In some possible implementations, a position of a pupil in an orbit may be determined through a deviation between a center point of the orbit and a center point of the pupil in the image information, to determine the line-of-sight direction of the human eyes. For example, when the center point of the orbit and the center point of the pupil are at a same position, it may be determined that the line-of-sight direction of the human eyes is straight ahead. For another example, when the center point of the pupil is located above the center point of the orbit, it may be determined that the line-of-sight direction of the human eyes is upward. An upward angle may be determined through an angle between a connection line between the center point of the orbit and a preset position and a connection line between the center point of the pupil and the preset position.

With reference to the first aspect, in some implementations of the first aspect, the displaying the prompt information on the head-up display based on a line-of-sight direction of human eyes in the image information includes: determining a display angle of the prompt information based on the line-of-sight direction of the human eyes; and displaying the prompt information on the head-up display based on the display angle.

With reference to the first aspect, in some implementations of the first aspect, the displaying prompt information on a head-up display based on the image information includes: determining, based on the face position in the image information, a height for displaying the prompt information on the head-up display; and displaying the prompt information on the head-up display based on the height.

In this embodiment of this application, for users with different heights and sitting postures, the height for displaying the prompt information on the head-up display may be determined based on the face position in the image information, to control, based on the height, a display height at which the prompt information is displayed on the head-up display. This helps ensure that the prompt information displayed on the head-up display is at a same horizontal height as the human face, so that the user does not need to look down or look up at the prompt information, thereby improving interaction experience of the user during information recording.

With reference to the first aspect, in some implementations of the first aspect, the method further includes: performing identity authentication based on feature information of the facial information.

With reference to the first aspect, in some implementations of the first aspect, before the identity authentication is performed based on the feature information of the facial information, the method further includes: detecting that the user initiates a first request.

In some possible implementations, the first request includes but is not limited to a payment request, a head unit unlocking request, a seat adjustment request, and the like.

In some possible implementations, the method further includes: if a preset operation of the user is detected within preset duration after the identity authentication succeeds, refusing to execute an instruction corresponding to the first request.

In some possible implementations, the preset operation includes but is not limited to an operation like head shaking or blinking of the user.

In this embodiment of this application, when determining that the identity authentication succeeds, the vehicle may further continue to detect behavior of the user within the preset duration. If the preset operation of the user is detected within the preset duration, the vehicle may refuse to execute the instruction corresponding to the first request. This helps improve the user's control over the identity authentication and ensures security and controllability of the identity authentication.

With reference to the first aspect, in some implementations of the first aspect, the method is applied to a transportation means, and the transportation means includes a central control screen; and the obtaining image information includes: obtaining the image information captured by a camera, where an angle formed by a connection line between an installation position of the camera and a preset position and a connection line between a position of the central control screen and the preset position is greater than or equal to a preset value.

In some possible implementations, the position of the central control screen may be represented by a position of a point (for example, a center point) on the central control screen.

In some possible implementations, the preset position may be a position of a display region of the head-up display. For example, the position of the display region of the head-up display may be represented by a position of a point (for example, a center point) in the display region.

In this embodiment of this application, when the angle formed by the connection line between the installation position of the camera and the preset position and the connection line between the position of the central control screen and the preset position is greater than or equal to the preset value, the prompt information may be displayed on the head-up display, to guide the user to perform information recording, without a need to take the camera and the display into consideration. This helps improve user experience during information recording of the user.

With reference to the first aspect, in some implementations of the first aspect, the method further includes: giving the user a prompt of voice information based on the image information, where the voice information is used to guide the user to record the facial information.

In this embodiment of this application, the prompt information is displayed on the head-up display; in addition, the user may further be guided by using a voice to record the facial information. This helps facilitate the user to complete information recording after viewing the prompt information and hearing the voice information, and helps improve user experience during information recording of the user.

With reference to the first aspect, in some implementations of the first aspect, the displaying prompt information on a head-up display based on the image information includes: when no face exists in the image information, giving, by using the head-up display, the user a prompt that no facial information is detected; when the face in the image information is occluded, giving, by using the head-up display, the user a prompt of not occluding the face; and/or when the face attitude angle in the image information is greater than or equal to a preset threshold, giving, by using the head-up display, the user a prompt of a direction in which the face needs to be rotated.

In this embodiment of this application, when there is no facial information in the image information, when the face is occluded, or when the face attitude angle in the image information is greater than or equal to the preset threshold, a corresponding prompt may be given to the user by using the head-up display. This helps the user quickly and conveniently complete the information recording process, and helps improve user experience during information recording.

According to a second aspect, an information recording method is provided. The method includes: obtaining image information; displaying prompt information on a head-up display based on the image information, where the prompt information is used to guide a user to record biometric feature information; and obtaining the biometric feature information.

In some possible implementations, the biometric feature information includes but is not limited to iris information, facial information, and the like.

In this embodiment of this application, a transportation means may complete biometric feature information recording (for example, facial information recording) in a biometric recognition (for example, facial recognition) process. For example, when detecting that the user initiates a biometric feature information recording (for example, facial information recording) request, the transportation means may start the biometric recognition process. The transportation means guides the user to record biometric feature information in the biometric recognition process. For example, in the biometric recognition process, the transportation means may extract biometric feature information from the captured image information, to store the biometric feature information in the transportation means.

According to a third aspect, an information recording apparatus is provided. The apparatus includes: an obtaining unit, configured to obtain image information; and a display unit, configured to display prompt information on a head-up display based on the image information, where the prompt information is used to guide a user to record facial information, and the obtaining unit is further configured to obtain the facial information.

With reference to the third aspect, in some implementations of the third aspect, the prompt information includes a face image, and the face image is determined based on the image information, or the face image is a face model.

With reference to the third aspect, in some implementations of the third aspect, the apparatus further includes: an adjustment unit, configured to adjust a face in the image information based on a face attitude angle in the image information, to obtain the face image.

With reference to the third aspect, in some implementations of the third aspect, the adjustment unit is further configured to adjust a display region of the face image based on a distance between a face position in the image information and a first region for displaying the face, so that the face image is displayed in the first region.

With reference to the third aspect, in some implementations of the third aspect, the display unit is specifically configured to display the prompt information on the head-up display based on the face attitude angle in the image information.

With reference to the third aspect, in some implementations of the third aspect, the determining unit is further configured to determine a display angle of the prompt information based on the face attitude angle; and the display unit is specifically configured to display the prompt information on the head-up display based on the display angle.

With reference to the third aspect, in some implementations of the third aspect, the display unit is specifically configured to display the prompt information on the head-up display based on a line-of-sight direction of human eyes in the image information.

With reference to the third aspect, in some implementations of the third aspect, the determining unit is further configured to determine a display angle of the prompt information based on the line-of-sight direction of the human eyes; and the display unit is specifically configured to display the prompt information on the head-up display based on the display angle.

With reference to the third aspect, in some implementations of the third aspect, the display unit is specifically configured to: determine, based on the face position in the image information, a height for displaying the prompt information on the head-up display, and display the prompt information on the head-up display based on the height.

With reference to the third aspect, in some implementations of the third aspect, the apparatus is located in a transportation means, and the transportation means includes a central control screen. The obtaining unit is specifically configured to obtain the image information captured by a camera. An angle formed by a connection line between an installation position of the camera and a preset position and a connection line between a position of the central control screen and the preset position is greater than or equal to a preset value.

With reference to the third aspect, in some implementations of the third aspect, the apparatus further includes: a voice prompt unit, configured to give, based on the image information, the user a prompt of voice information, where the voice information is used to guide the user to record the facial information.

With reference to the third aspect, in some implementations of the third aspect, the display unit is specifically configured to: when no face exists in the image information, give, by using the head-up display, the user a prompt that no facial information is detected; when the face in the image information is occluded, give, by using the head-up display, the user a prompt of not occluding the face; and/or when the face attitude angle in the image information is greater than or equal to a preset threshold, give, by using the head-up display, the user a prompt of a direction in which the face needs to be rotated.

With reference to the third aspect, in some implementations of the third aspect, the apparatus further includes: an identity authentication unit, configured to perform identity authentication based on feature information of the facial information.

According to a fourth aspect, an information recording apparatus is provided. The apparatus includes: an obtaining unit, configured to obtain image information; and a display unit, configured to display prompt information on a head-up display based on the image information, where the prompt information is used to guide a user to record biometric feature information, and the obtaining unit is further configured to obtain the biometric feature information.

According to a fifth aspect, an apparatus is provided. The apparatus includes a processing unit and a storage unit. The storage unit is configured to store instructions, and the processing unit executes the instructions stored in the storage unit, to enable the apparatus to perform the method according to any one of the first aspect or the possible implementations of the first aspect or any one of the second aspect or the possible implementations of the second aspect.

Optionally, the processing unit may include at least one processor, and the storage unit may be a memory. The memory may be a storage unit (for example, a register or a cache) in a chip, or may be a storage unit (for example, a read-only memory, or a random access memory) located outside the chip in a transportation means.

According to a sixth aspect, a transportation means is provided, and the transportation means includes the apparatus according to any one of the third to fifth aspects.

With reference to the sixth aspect, in some implementations of the sixth aspect, the transportation means is a vehicle.

According to a seventh aspect, a computer program product is provided. The computer program product includes computer program code. When the computer program code is run on a computer, the computer is enabled to perform the method according to the first aspect or the second aspect.

It should be noted that some or all of the computer program code may be stored in a first storage medium. The first storage medium may be encapsulated with a processor, or may be encapsulated separately from a processor. This is not specifically limited in embodiments of this application.

According to an eighth aspect, a computer-readable medium is provided. The computer-readable medium stores program code. When the computer program code is run on a computer, the computer is enabled to perform the method according to the first aspect or the second aspect.

According to a ninth aspect, an embodiment of this application provides a chip system. The chip system includes a processor, configured to invoke a computer program or computer instructions stored in a memory, to enable the processor to perform the method according to the first aspect or the second aspect.

With reference to the ninth aspect, in a possible implementation, the processor is coupled to the memory through an interface.

With reference to the ninth aspect, in a possible implementation, the chip system further includes the memory, and the memory stores the computer program or the computer instructions.

In embodiments of this application, the prompt information is displayed on the head-up display, so that the user completes information recording under guidance of the prompt information displayed on the head-up display, without a need to take the camera and the display into consideration. This helps improve convenience of information recording by the user, thereby helping improve user experience.

The prompt information is used to guide the user to record the facial information. This helps improve convenience of recording the facial information by the user, thereby helping improve user experience.

The face image is displayed on the head-up display, so that the user can be guided to record information in a face-to-face manner. This helps improve interaction experience of the user during information recording.

The face is adjusted (or returned) based on the face attitude angle in the image information, so that the user can view front face information of the user on the head-up display. This resolves a problem of poor interaction experience caused by an installation position of a camera, and helps improve user interaction experience during information recording.

The display region of the face image is adjusted to the first region, so that the users with different heights and sitting postures can view the face images in the target region in which the image is displayed on the head-up display. This helps improve interaction experience of the user during information recording.

The display angle at which the prompt information is displayed on the head-up display is adjusted based on the face attitude angle in the image information. This helps ensure that the prompt information displayed on the head-up display appears directly in front of the face orientation of the user, thereby helping improve interaction experience of the user during information recording.

The display angle at which the prompt information is displayed on the head-up display is adjusted based on the line-of-sight direction of the human eyes. This helps ensure that the human eyes of the user can directly look at the prompt information displayed on the head-up display, thereby helping improve interaction experience of the user during information recording.

The height for displaying the prompt information on the head-up display is determined based on the face position in the image information, to control, based on the height, the display height at which the prompt information is displayed on the head-up display. This helps ensure that the prompt information displayed on the head-up display is at a same horizontal height as the human face, so that the user does not need to look down or look up at the prompt information, thereby improving interaction experience of the user during information recording.

### BRIEF DESCRIPTION OF DRAWINGS

FIG. 1 is a schematic diagram of a vehicle cockpit scenario according to an embodiment of this application;
FIG. 2 is a schematic functional block diagram of a vehicle according to an embodiment of this application;
FIG. 3 is an architectural diagram of an in-vehicle facial recognition system according to an embodiment of this application;
FIG. 4 is a schematic diagram in which a user in a front passenger seat performs facial recognition by using a head-up display;
FIG. 5 is a schematic flowchart of an information recording method according to an embodiment of this application;
FIG. 6 is another schematic flowchart of a facial recognition method according to an embodiment of this application;
FIG. 7 is a schematic diagram in which a user is given, by using a head-up display and a voice, a prompt that no face exists according to an embodiment of this application;
FIG. 8 is a schematic diagram in which a user is given, by using a head-up display and a voice, a prompt of not occluding a face according to an embodiment of this application;
FIG. 9 is a schematic diagram in which a face attitude angle is represented by an xyz coordinate system;
FIG. 10 is a schematic diagram in which a user is given, by using a head-up display and a voice, a prompt of a face adjustment direction according to an embodiment of this application;
FIG. 11 is a schematic diagram of a process of constructing a face detection model, a face occlusion detection model, and a face attitude angle detection model;
FIG. 12 is another schematic flowchart of a facial recognition method according to an embodiment of this application;
FIG. 13 is a schematic diagram in which a user is given, by using a head-up display, a prompt that no face exists according to an embodiment of this application;
FIG. 14(a) and FIG. 14(b) are schematic diagrams in which a user is given, by using a head-up display, a prompt of not occluding a face according to an embodiment of this application;
FIG. 15 is a schematic diagram in which a user is given, by using a head-up display, a prompt of a face adjustment direction according to an embodiment of this application;
FIG. 16 is a schematic flowchart of a facial recognition method according to an embodiment of this application;
FIG. 17(a), FIG. 17(b), FIG. 17(c), and FIG. 17(d) are schematic diagrams in which a display angle of a head-up display is adjusted according to an embodiment of this application;
FIG. 18 is another schematic diagram in which a display angle of a head-up display is adjusted according to an embodiment of this application;
FIG. 19 is another schematic flowchart of a facial recognition method according to an embodiment of this application;
FIG. 20 is a schematic diagram in which facial information is displayed on a head-up display according to an embodiment of this application;
FIG. 21 is a schematic diagram in which a face position is adjusted according to an embodiment of this application;
FIG. 22 is a schematic flowchart of a facial recognition method according to an embodiment of this application;
FIG. 23 is a schematic flowchart of an information recording method according to an embodiment of this application; and
FIG. 24 is a schematic block diagram of an information recording apparatus according to an embodiment of this application.

### DESCRIPTION OF EMBODIMENTS

The following describes the technical solutions in embodiments of this application with reference to the accompanying drawings in embodiments of this application. In descriptions of embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists.

In embodiments of this application, prefix words such as "first" and "second" are merely used to distinguish between different described objects, and do not limit a position, a sequence, a priority, a quantity, or content of the described objects. For example, if the described object is a "field", an ordinal number before a "field" in a "first field" and a "second field" does not limit a position or a sequence between "fields". "First" and "second" do not limit whether "fields" modified by the "first" and "second" are in a same message, nor do they limit a sequence of the "first field" and the "second field". For another example, if the described object is a "level", an ordinal number before a "level" in a "first level" and a "second level" does not limit a priority between "levels". For another example, a quantity of described objects is not limited by an ordinal number, and may be one or more. A "first device" is used as an example. There may be one or more devices. In addition, objects modified by different prefixes may be the same or different. For example, if the described object is a "device", the "first device" and a "second device" may be devices of a same type or devices of different types. For another example, if the described object is "information", "first information" and "second information" may be information of a same content or information of different content. In a word, in embodiments of this application, use of a prefix word for distinguishing between described objects, like an ordinal number, does not constitute a limitation on the described object. For descriptions of the described object, refer to context descriptions in the claims or embodiments, and use of the prefix word should not constitute a redundant limitation. In addition, in descriptions of embodiments, unless otherwise specified, "a plurality of" means two or more.

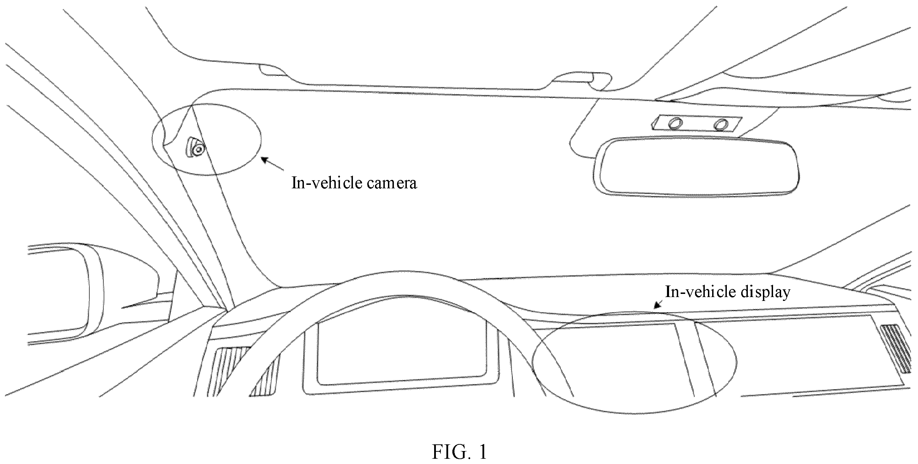

FIG. 1 is a schematic diagram of a vehicle cockpit scenario according to an embodiment of this application. One or more cameras, for example, a camera of a driver monitor system (driver monitor system, DMS), a camera of a cabin monitor system (cabin monitor system, CMS), and a camera of a dashcam (dashcam), may be installed inside an intelligent cockpit, to capture an image inside or outside the cockpit. In FIG. 1, a camera disposed on a pillar A is used as an example. In addition, an in-vehicle display is further disposed in the cockpit. In FIG. 1, a display disposed in a central control area is used as an example. Generally, a camera (for example, a front-facing camera) of a mobile phone is close to the display. During facial recognition, a user may take facial information displayed on the camera and the display into consideration. However, because there are many inconsistencies between positions or angles of the camera and the display in the cockpit (as shown in FIG. 1), the user needs to face the display and a camera direction during biometric recognition (for example, facial recognition), resulting in complex user operations and poor experience.

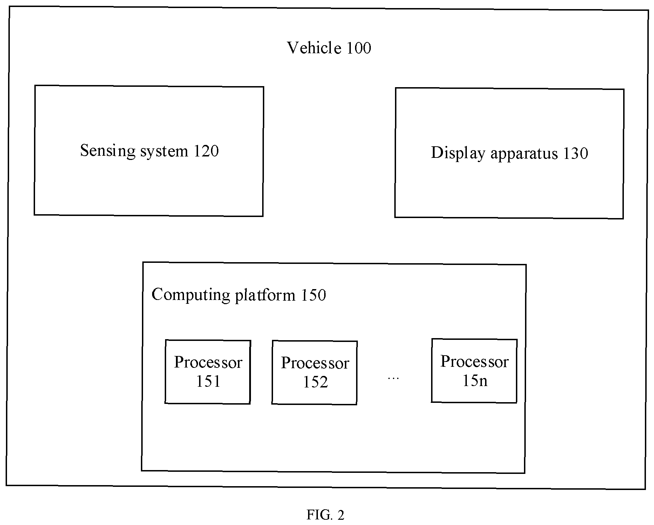

FIG. 2 is a schematic functional block diagram of a vehicle 100 according to an embodiment of this application. The vehicle 100 may include a sensing system 120, a display apparatus 130, and a computing platform 150. The sensing system 120 may include several types of sensors that sense information about an ambient environment of the vehicle 100. For example, the sensing system 120 may include one or more of a positioning system, a BeiDou system, or another positioning system, an inertial measurement unit (inertial measurement unit, IMU), a lidar, a millimeter-wave radar, an ultrasonic radar, and a camera apparatus, where the positioning system may be a global positioning system (global positioning system, GPS).

Some or all of functions of the vehicle 100 may be controlled by the computing platform 150. The computing platform 150 may include processors 151 to 15n (where n is a positive integer), and the processor is a circuit that has a signal processing capability. In an implementation, the processor may be a circuit that has an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function through a logical relationship of a hardware circuit, and the logical relationship of the hardware circuit is fixed or reconfigurable. For example, the processor is an application-specific integrated circuit (application-specific integrated circuit, ASIC) or a hardware circuit implemented by a programmable logic device (programmable logic device, PLD), for example, an FPGA. In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 150 may further include a memory, and the memory is configured to store instructions. Some or all of the processors 151 to 15n may invoke and execute the instructions in the memory, to implement a corresponding function.

The display apparatus 130 in the cockpit is mainly classified as an in-vehicle display and a projection display, for example, a head-up display (head-up display, HUD). The in-vehicle display is a physical display, and is an important part of a head unit system. A plurality of displays may be arranged in the cockpit, for example, a digital instrument display, a central control screen, and a display in front of a passenger in a front passenger seat (also referred to as a front passenger), a display in front of a left rear passenger, a display in front of a right rear passenger, and even a window that can be used as a display for display. The head-up display is also known as a head-up display system. The head-up display is mainly used to display driving information such as a speed and navigation on a display device (for example, a windshield) in front of a driver, to reduce the driver's line of sight transfer time, avoid a pupil change caused by the driver's line of sight transfer, and improve driving safety and comfort. HUDs include, for example, a combiner head-up display (combiner-HUD, C-HUD) system, a windshield head-up display (windshield-HUD, W-HUD) system, an augmented reality head-up display (augmented reality HUD, AR-HUD) system.

In embodiments of this application, at least one processor may obtain image information captured by a camera, and output prompt information based on the image information. The prompt information is used to guide a user to perform an information recording process, so that the user can more conveniently perform information recording and complete a verification process like biometric recognition based on the prompt information, to improve user security and user experience. In another implementation, at least one processor may obtain image information captured by a camera, and control a capturing angle of the camera based on the image information, so that a captured biometric feature (for example, a face or an iris) can meet an identity authentication requirement, to reduce a user operation, and improve user security and user experience. In still another implementation, at least one processor may obtain image information captured by a camera, and control a display position of a display apparatus based on the image information, so that a position of the prompt information displayed by the display apparatus is more conducive to a user operation, to improve user security and user experience. For example, the display apparatus is a head-up display, and a position, a height, a display angle, and the like of the prompt information displayed on the head-up display are adjusted, to facilitate the user to record biometric feature information.

Each of the foregoing manners is used independently, or some or all of the manners are used together, to guide the user to perform a biometric recognition process. This resolves a problem of operation inconvenience caused when the user needs to take a camera and an in-vehicle display into consideration during biometric recognition. Further, the prompt information displayed on the head-up display guides the user to complete the biometric recognition process like facial recognition. This helps improve use experience of the user during biometric recognition.

It should be understood that the biometric recognition described in embodiments of this application may include facial recognition, iris recognition, or the like, and the biometric recognition may be used in scenarios such as unlocking a head unit through a face/an iris, seat memorizing, face/iris payment, gesture payment, and face/iris authentication. This is not limited in this application.

It should be understood that, in embodiments of this application, a position of a camera in a cockpit that captures image information is not specifically limited. The camera may be located on the pillar A shown in FIG. 1, may be located under a steering wheel, or may be located near a rearview mirror.

An information recording method provided in an embodiment of this application is described by using an example in which the prompt information is output based on the image information, and the prompt information is displayed on the head-up display, to guide the user to perform an information recording process. The method may be used in the biometric recognition process. For example, in a facial recognition process, facial information is obtained, and the prompt information is displayed on the head-up display, so that the user can be guided to perform facial recognition, without a need to take the display and the camera into consideration. This helps improve user experience.

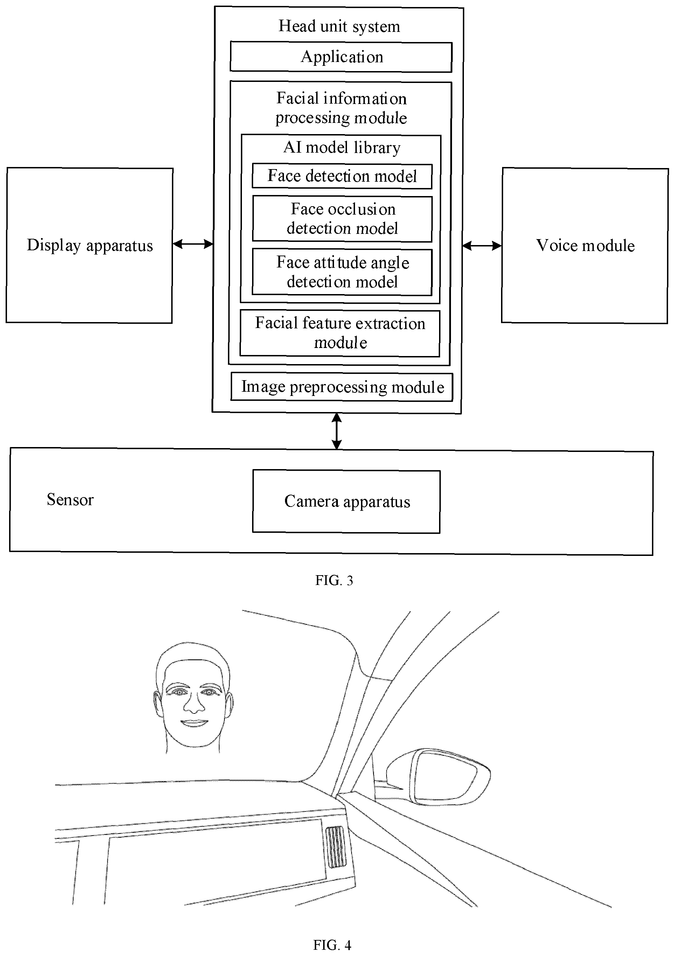

FIG. 3 is an architectural diagram of a facial recognition system according to an embodiment of this application. The system includes a display apparatus, a heat unit system, a voice module, and a sensor. The sensor includes a camera apparatus (which may also be referred to as a camera or an image sensor). The camera apparatus is a vehicle-mounted sensor, and may be disposed in a cockpit to capture image information in the cockpit. The camera apparatus can be arranged at different positions in the cockpit to capture image information of different regions, or a spatial position of the camera apparatus may be adjusted (for example, the camera apparatus may be rotated and/or lifted) to capture image information of different regions. For example, for a five-seat vehicle, the camera apparatus may be configured to obtain image information of a driver region, or may be configured to obtain image information of a front passenger region, or may be configured to obtain image information of a second left passenger region, a second right passenger region, or a second middle passenger region. For another example, for a seven-seat vehicle, the camera apparatus may be configured to obtain image information of a driver region, or may be configured to obtain image information of a front passenger region, or may be further configured to obtain image information of a second left passenger region, a second right passenger region, or a second middle passenger region; or the camera apparatus may be further configured to obtain image information of a third left passenger region, a third right passenger region, or a third middle passenger region. The head unit system includes an application, a biological information processing module (where a facial information processing module in FIG. 3 is used as an example), and an image preprocessing module. For example, when a vehicle detects an operation of starting an application by the user, the vehicle may be triggered to start facial recognition, and the head unit system may control the camera apparatus to start and start capturing image information, so that the camera apparatus can feed back the captured image information to the head unit system. The image preprocessing module may preprocess the image information and then the facial information processing module extracts corresponding facial information. The head unit system may feed back the facial information to the display apparatus for display, so that the display apparatus guides the user to perform facial recognition in a graphic manner (or a face-to-face manner), where the display apparatus is, for example, a head-up display, to guide the user to perform facial recognition from a more convenient angle. In addition, the head unit system may alternatively send prompt information to the voice module, so that the voice module may give, by using a voice, the user a prompt of performing facial recognition. The head unit system may run on the computing platform 150. The computing platform includes a hardware platform. The hardware platform includes at least one processor, for example, one or more types of processors such as a CPU, a GPU, or an ASIC, and may further include at least one memory, configured to store the image information and instructions. An operating system can run on the hardware platform, and provides a basis for running application software, so that a plurality of application services such as head unit unlocking, payment, and seat memorizing can run on the hardware platform. For these applications, security authentication based on biometric recognition may be provided, to improve use security of these applications, so that the applications can trigger a biometric recognition process. According to the method provided in embodiments of this application, the user can be guided to record information in the biometric recognition process. This improves user experience. The facial information processing module and the image preprocessing module may be implemented by using the at least one processor in the hardware platform.

It should be understood that, in embodiments of this application, the voice module may be located outside the head unit system, or may be located in the head unit system. In the foregoing embodiment, an example in which the voice module is located outside the head unit system is used for description.

In an embodiment, different facial recognition processes may be bound to different user accounts. For example, for a facial payment process, a facial feature of a user A may be used for authentication. For another example, for an operation of unlocking a head unit or starting a smart device with a face, a facial feature of a user B may be used for authentication.

In an embodiment, a display position of the head-up display may be further bound to an identity of the user. For example, facial feature information of a user A and a user B is stored in a vehicle. When facial payment needs to be performed, it may be determined that a captured facial feature is authenticated based on a facial feature of the user A. If the camera may first determine that the user A is located in a front passenger seat, the head-up display may be controlled to display the captured facial information in a region corresponding to the front passenger seat, and guide the user to perform facial recognition. FIG. 4 shows a process in which a user in a front passenger seat performs facial recognition by using a head-up display. The vehicle may include two head-up displays, which may respectively provide prompt information to a user in a driver seat and a user in a front passenger seat. Alternatively, the prompt information may be displayed on the head-up display by partition, so that the prompt information is separately displayed to the user in the driver seat and the user in the front passenger seat.

For another example, when the head unit needs to be unlocked with a face, it may be determined that the captured facial feature is authenticated based on the facial feature of the user B. For example, the head unit system may first determine, based on the image information captured by the camera, that the user B is located in the driver seat, so that the head-up display may be controlled to display the captured facial information in a region corresponding to the driver seat, and guide the user to perform facial recognition.

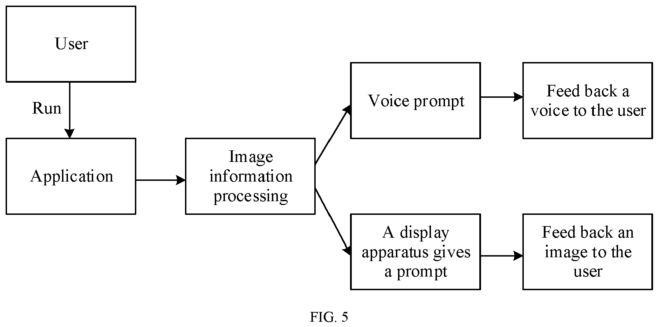

FIG. 5 is a schematic flowchart of an information recording method according to an embodiment of this application. The method may be applied to a facial recognition process, and may also be applied to another similar biometric recognition process, for example, iris recognition. When a user runs an application, running of the application may trigger a security authentication process. The security authentication process may be implemented by using a biometric recognition technology. In other words, running of the application triggers a biometric recognition process. In an implementation, the triggering process is automatic. When a processor of a head unit system detects an operation of performing biometric recognition or an operation of starting an application by the user, the application needs to perform biometric recognition security authentication. When the security authentication process is triggered, a camera apparatus is controlled to capture an image, image information processed by the camera apparatus is sent to the head unit system, and the head unit system processes the image information, to determine whether the current image information includes feature information suitable for performing biometric recognition or whether feature information for performing biometric recognition in the current image information meets a requirement. When the current image information does not include the feature information suitable for performing biometric recognition or the feature information for performing biometric recognition in the current image information does not meet the requirement, a voice or an image is fed back to the user by using a voice prompt and/or a prompt on a display apparatus, so that the user completes information recording under the guidance of prompt information displayed through the voice and/or the image (where the information is feature information suitable for performing biometric recognition), for example, a face image or iris information.

In an implementation, a process in which the head unit system processes the captured image information may include face returning, and this is described in detail in the following embodiments.

In another implementation, the head unit system may adjust a spatial display position of the display apparatus based on a face position obtained by processing the captured image information, to reduce a user requirement for adjusting a face position of the user. For example, if the display apparatus is a head-up display, a display angle and/or a display position of the head-up display may be adjusted. For another example, if the display apparatus is, for example, a display apparatus that can be lifted and/or rotated, a height and/or a rotation angle of the head-up display may be adjusted.

In still another implementation, the head unit system may adjust, based on a face position obtained by processing the captured image information, a spatial position at which the camera apparatus captures an image, to reduce a user requirement for adjusting a face position of the user. For example, there are a plurality of camera apparatuses in a cockpit, and a camera apparatus with a more appropriate image shooting angle may be used to capture an image, or images captured by the plurality of camera apparatuses may be fused. For another example, if the camera apparatus is, for example, a camera apparatus that can be lifted and/or rotated, a height and/or a rotation angle of the camera apparatus may be adjusted, to capture an image at a better image shooting angle.

The foregoing implementations may be combined to bring better use experience to the user.

The biometric recognition process in embodiments of this application may include an information recording process and an identity authentication process. For example, if biometric feature information of the user is not stored in the head unit system, after the user initiates a biometric feature information recording process, the head unit system may display the prompt information (where the prompt information may be used to guide the user to record the biometric feature information) by using the display apparatus, to help the user conveniently complete biometric feature information recording. For another example, if biometric feature information of the user is stored in the head unit system, after the user initiates the identity authentication process, the head unit system may display the prompt information (where the prompt information may be used to guide the user to record information for identity identification) by using the display apparatus, to initiate a biometric feature information recording process, and match the recorded biometric feature information (for example, biometric feature information in an image captured by the camera) with the biometric feature information stored in the head unit system. If the matching succeeds, the identity authentication succeeds. If the matching fails, the authentication fails.

The information recording process may be that the biometric feature information is obtained in the biometric recognition process, and the biometric feature information is stored locally in the head unit system, to match biometric feature information captured in a subsequent identity authentication process. Alternatively, the information recording process may be information recording in the identity authentication process. For example, the biometric feature information is first recorded in the identity authentication process, and then the biometric feature information is matched with preset biometric feature information in the head unit system, to determine whether the identity authentication succeeds.

In an implementation, the head unit system may determine, based on a received user input, whether the biometric recognition process is information recording or identity authentication. For example, when the head unit system receives a voice instruction "Enable face recording", the head unit system may start a facial recognition process, display prompt information (where the prompt information may be used to guide the user to record facial information) on the display apparatus in the facial recognition process, and obtain the facial information. For another example, when the head unit system receives a voice instruction "Parking fee payment", the head unit system may start a facial recognition process, display prompt information (where the prompt information may be used to guide the user to perform identity authentication) in the facial recognition process, and match facial information in an image captured by the camera apparatus with the facial information stored in the head unit system. If the matching succeeds, the identity authentication succeeds and the head unit system completes a payment operation. If the matching fails, the identity authentication fails and the head unit refuses to execute a payment operation.

For example, when the head unit system determines that the user taps a face recording control on a central control screen, the head unit system may start a facial recognition process, display prompt information (where the prompt information may be used to guide the user to record facial information) on the display apparatus in the facial recognition process, and obtain the facial information. For another example, when the head unit system determines that the user taps a seat adjustment control on a central control screen, the head unit system may start a facial recognition process, display prompt information (where the prompt information may be used to guide the user to perform identity authentication) in the facial recognition process, and match facial information in an image captured by the camera apparatus with the facial information stored in the head unit system. If the matching succeeds, the identity authentication succeeds and the head unit system adjusts a seat in a saved seat adjustment mode. If the matching fails, the identity authentication fails and the head unit refuses adjustment of a seat.

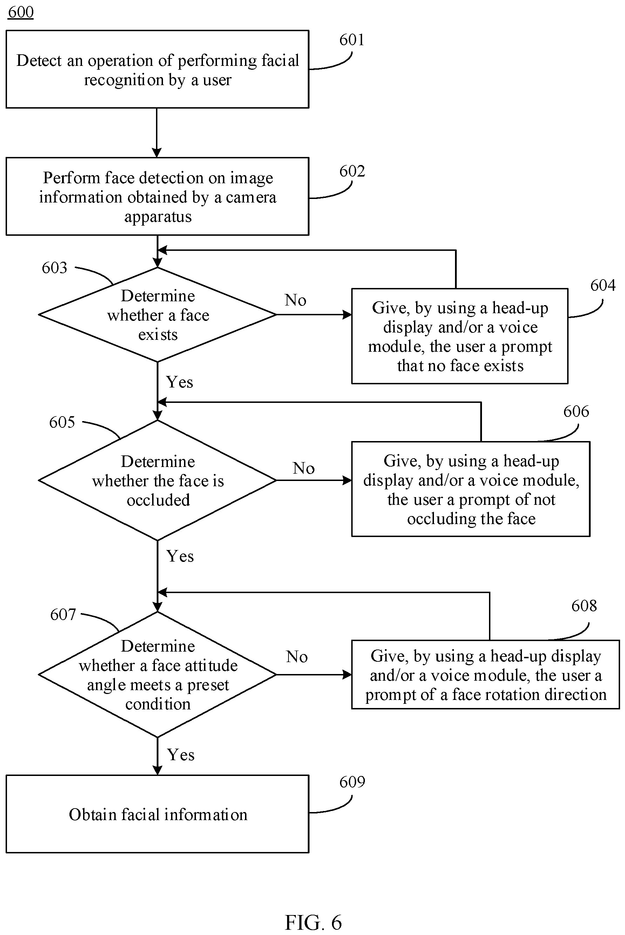

Information recording in a facial recognition process is used as an example. Refer to FIG. 6. FIG. 6 is a schematic flowchart of a facial recognition method 600 according to an embodiment of this application. As shown in FIG. 6, the method 600 includes the following steps.

S601: Detect an operation of performing facial recognition by a user.

For example, detecting the operation of performing facial recognition by the user may be detecting a face recording request of the user.

For example, the operation may be that a vehicle detects that the user starts an application and detects that the user taps a face recording control.

For another example, the operation may be a voice instruction "Enable face recording", "Unlock a head unit", or the like sent by the user.

For example, when the user drives a vehicle at the entrance of a parking lot and prepares to pay for driving out of the parking lot, a payment machine in the parking lot may determine a parking fee of the vehicle after identifying a license plate number of the vehicle. The payment machine may send information about the parking fee to the vehicle. In response to receiving the information about the parking fee, the vehicle may give the user a prompt (for example, the user is prompted by using a voice, or the user is prompted by using prompt information displayed by a display apparatus) whether to pay the parking fee. When the vehicle detects that the user performs a parking fee payment operation, facial recognition may be performed. In this case, the vehicle may control a head-up display to display image information captured by a camera in a cockpit, to guide the user to perform facial recognition. After the facial recognition succeeds, the vehicle can perform the parking fee payment operation.

S602: Perform face detection on image information obtained by a camera apparatus.

For example, when the vehicle detects the operation of performing facial recognition by the user, a head unit system may control the camera to capture the image information. After the image information is preprocessed by an image preprocessing module in the head unit system, face detection may be performed by a face detection model in a facial information processing module.

In an embodiment, the facial information processing module may include an artificial intelligence (artificial intelligence, AI) model library and a facial feature extraction module. The AI model library may include a face detection model, a face occlusion detection model, a face attitude angle detection model, and the like. The image information is input into the face detection model, so that the facial information processing module can obtain a result about whether a face exists. The image information is input into the face occlusion detection model, so that the facial information processing module can obtain a result about whether a face is occluded. The image information is input into the face attitude angle detection model, so that the facial information processing module can obtain a face attitude angle in the image information, to determine whether the face attitude angle meets a preset condition.

S603: Determine whether the face exists.

After the face detection model performs face detection, the facial information processing module in the head unit system may output a result about whether the face exists. If the face exists, S605 is performed; or if no face exists, S604 is performed.

S604: If no face exists, give, by using the head-up display and/or a voice module (for example, a speaker), the user a prompt that no face exists.

In an embodiment, if no face exists, the user may be given, by using a voice and the head-up display, a prompt that no face exists.

In an embodiment, if no face exists, the user may be given, by using a voice, a prompt of "Look straight ahead", to guide the user to perform facial recognition.

In an embodiment, if no face exists, the user may be given, by using an image on the head-up display, a prompt that no face exists, to guide the user to perform facial recognition.

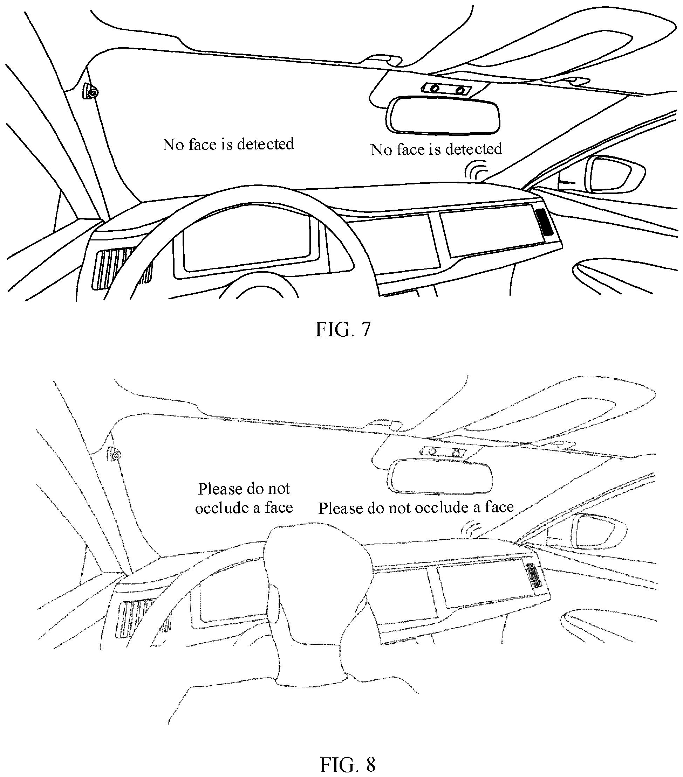

For example, FIG. 7 is a schematic diagram in which a user is given, by using a head-up display and a voice, a prompt that no face exists according to an embodiment of this application. When no face is detected, the head unit system may control the voice module (for example, the speaker) to send voice information "No face is detected" and control the head-up display to display a prompt message "No face is detected".

S605: If it is detected that the face exists, determine whether the face is occluded.

For example, when the face detection model determines that the face exists, the face occlusion detection model in the facial information processing module may continue to determine whether the face is occluded. If the face is occluded, S606 is performed; or if the face is not occluded, S607 is performed.

In an embodiment, after the image information is input into the face occlusion detection model, the facial information processing module may output a proportion of an occluded area in an entire face area. For example, if the proportion is greater than or equal to a preset proportion, the facial information processing module may determine that the face is occluded.

S606: If it is detected that the face is occluded, give, by using the head-up display and/or the voice module (for example, the speaker), the user a prompt of not occluding the face.

In an embodiment, if the face is occluded, the user may be given, by using a voice, a prompt of not occluding the face, and/or a prompt indicating not to occlude the face may be displayed on the head-up display.

For example, FIG. 8 is a schematic diagram in which a user is given, by using a head-up display and a voice, a prompt of not occluding a face according to an embodiment of this application. When it is detected that the face is occluded, the head unit system may control the voice module (for example, the speaker) to send voice information "Please do not occlude a face" and display a prompt message "Please do not occlude a face" on the head-up display.

S607: If it is detected that the face is not occluded, determine whether the face attitude angle meets the preset condition.

For example, if it is detected that the face is not occluded, whether the face attitude angle meets the preset condition may continue to be determined by the face attitude angle detection model.

In an embodiment, the preset condition may be that the face attitude angle is less than or equal to a preset angle threshold (for example, 15 degrees (°)).

If the face attitude angle meets the preset condition, S609 is performed; or if the face attitude angle does not meet the preset condition, S608 is performed.

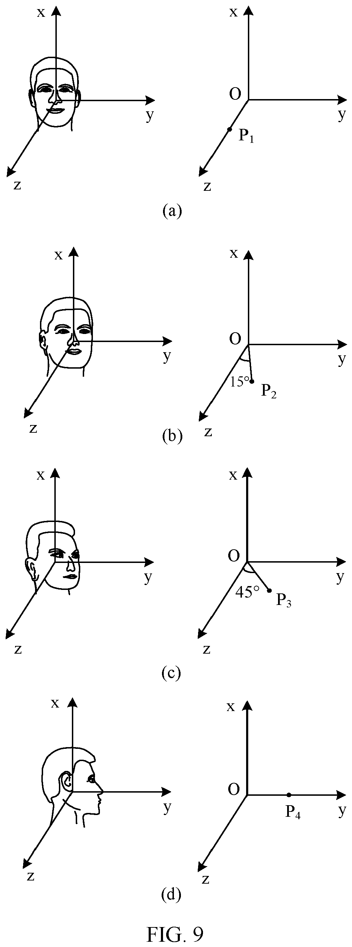

The face attitude angle in this embodiment of this application may be angle information of a face orientation of the user. For example, a face orientation in a 3-dimensional space may be calculated based on image information of the face, and the face attitude angle may be represented by three rotation angles (pitch, yaw, roll) that represent an orientation, where the pitch represents a pitch angle (a rotation angle about an x axis, representing flipping up and down), the yaw is a yaw angle (a rotation angle about a y axis, representing flipping left and right), and the roll indicates a roll angle (a rotation angle about a z axis, representing in-plane rotation). FIG. 9 is a schematic diagram in which a face attitude angle is represented by an xyz coordinate system. For example, the face attitude angle may be determined by determining a position of an ear or a face contour.

In an embodiment, two-dimensional face image information captured by the camera may be converted into a three-dimensional coordinate system (for example, an xyz coordinate system), to determine the face attitude angle by using coordinates of a face key point.

For example, as shown in (a) in FIG. 9, P₁ is a coordinate point of a nose tip when the face is not turned to the left or right. Because the coordinate point of the nose tip is located on an xz plane, an angle corresponding to the yaw is 0°.

For example, as shown in (b) in FIG. 9, P₂ is a coordinate point of the nose tip when the face is turned to the left by 15°. It is assumed that the point P₂ is located in a yz plane. The angle corresponding to the yaw is an included angle (15°) between a connection line of the point P₂ and a point O and the xz plane.

For example, as shown in (c) in FIG. 9, P₃ is a coordinate point of the nose tip when the face is turned to the left by 45°. It is assumed that the point P₃ is located in the yz plane. The angle corresponding to the yaw is an included angle (45°) between a connection line of the point P₃ and the point O and the xz plane.

For example, as shown in (d) in FIG. 9, P₄ is a coordinate point of the nose tip when the face is turned to the left by 90°. It is assumed that the point P₄ is located in a xy plane. The angle corresponding to the yaw is an included angle (90°) between a connection line of the point P₄ and the point O and the xz plane.

It should be understood that, the yaw angle at which the face rotates toward the y axis is determined by using the coordinates of the nose tip, and an angle at which the face rotates toward the y axis may also be determined by using another coordinate point (for example, coordinates of a left eye, a right eye, a left mouth corner, or a right mouth corner).

It should be further understood that the pitch angle at which the face rotates toward the x axis and the roll angle at which the face rotates toward the z axis may also be determined by using the coordinates of the face key point, and details are not described herein again.

In an embodiment, the vehicle may perform, by using a neural network for inference, inference on image data captured by the camera, to obtain a corresponding face attitude angle in the image data. The neural network may be a neural network trained by using labeled data, for example, a temporal convolutional network (Temporal Convolutional Network). For example, when the face attitude angle of the user is (0°, 0°, 0°), two-dimensional image data captured by the camera may be obtained, and a label whose face attitude angle is (0°, 0°, 0°) is attached to the two-dimensional image data. Then, the labeled data can be used as data labeled when the face attitude angle is (0°, 0°, 0°). For another example, when the face attitude angle of the user is (0°, 15°, 0°), two-dimensional image data captured by the camera may be obtained, and a label whose face attitude angle is (0°, 15°, 0°) is attached to the two-dimensional image data. Then, the labeled data can be used as data labeled when the face attitude angle is (0°, 15°, 0°). The neural network is trained by using a plurality of pieces of labeled data, so that the neural network can converge to the optimal.

It should be further understood that, in this embodiment of this application, the xyz coordinate system may be used to represent the face attitude angle, or another coordinate system (for example, a vehicle coordinate system) may be used to represent the face attitude angle.

S608: If it is detected that the face attitude angle does not meet the preset condition, give, by using the head-up display and/or the voice module (for example, the speaker), the user a prompt of a face rotation direction.

In an embodiment, if it is detected that the face attitude angle does not meet the preset condition, the user may be given, by using a voice and the head-up display, a prompt of the face rotation direction.

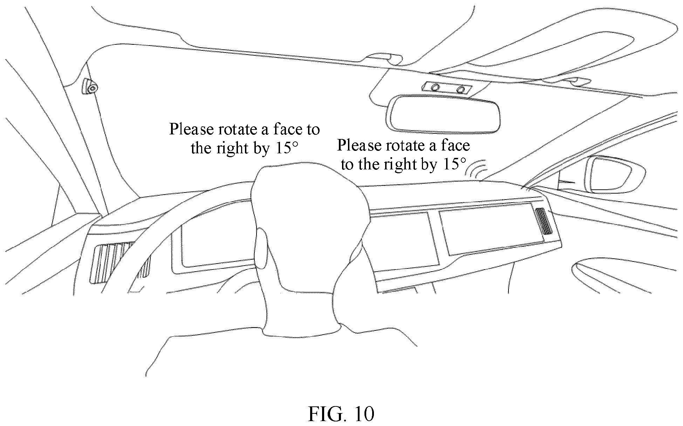

For example, FIG. 10 is a schematic diagram in which a user is given, by using a head-up display and a voice, a prompt of a face adjustment direction according to an embodiment of this application. When it is detected that the face attitude angle does not meet the preset conditions, the head unit system may control the voice module to send voice information "Please rotate a face to the right by 15°" and display a prompt message "Please rotate a face to the right by 15°" on the head-up display.

In an embodiment, if it is detected that the face attitude angle does not meet the preset condition, the head unit system may adjust a spatial position at which the camera apparatus captures an image, to reduce a user requirement for adjusting a face position of the user.

S609: If it is detected that the face attitude angle meets the preset condition, obtain facial information.

For example, if it is detected that the face attitude angle meets the preset condition, the facial feature extraction module may continue to extract the facial information in the image information, to obtain the facial information. Specifically, the facial feature extraction module may extract feature information of the facial information in the image information, to obtain the feature information of the facial information, and store the feature information in the head unit system.

For example, if no face exists in the image information, or the face in the image information is occluded, or the face attitude angle in the image information does not meet the preset condition, the head unit system may give, by using the display apparatus and/or the voice module, the user a prompt, to obtain new image information, and obtain the facial information from the new image information.

In an embodiment, the facial information processing module may include the facial feature extraction module. When the face detection model in the facial information processing module determines that the face exists, the face occlusion detection model in the facial information processing module determines that the face is not occluded, and the face attitude angle detection model in the facial information processing module determines that the face attitude angle meets a condition, the facial feature extraction module can complete facial information extraction on the image information.

It should be understood that the facial feature extraction module may alternatively be located outside the facial information processing module. When the face detection model in the facial information processing module determines that the face exists, the face occlusion detection model in the facial information processing module determines that the face is not occluded, and the face attitude angle detection model in the facial information processing module determines that the face attitude angle meets the condition, the facial information processing module may send the image information to the facial feature extraction module, so that the facial feature extraction module can complete facial information extraction on the image information.

In an embodiment, if the operation in S601 is a face recording operation, the method further includes: storing the feature information of the facial information, to perform comparison and authentication with a facial feature captured in a subsequent identity authentication (for example, unlocking a head unit with a face) process.

It should be understood that, when the operation in S601 is the face recording operation, the method shown in FIG. 6 may also be referred to as an information recording method.

In an embodiment, if the operation in S601 is an identity authentication operation, the method further includes: matching the feature information of the facial information with a preset facial feature in the vehicle. If the matching succeeds, the identity authentication succeeds. If the matching fails, the authentication fails.

It should be understood that, when the operation in S601 is the identity authentication operation, the method shown in FIG. 6 may also be referred to as an identity authentication method.

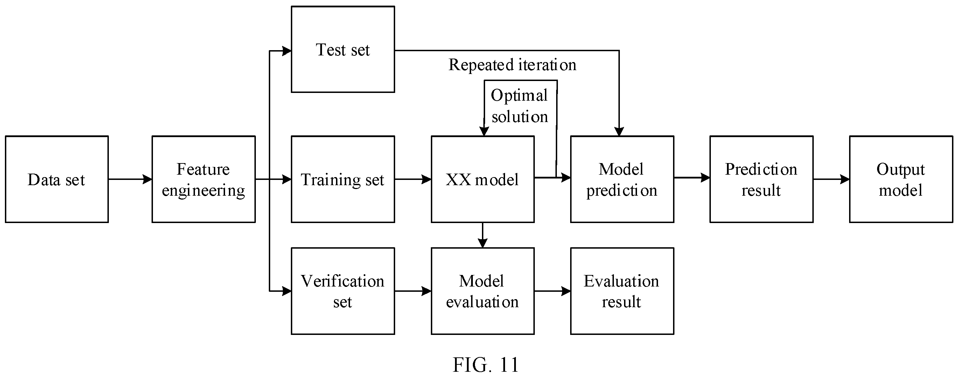

FIG. 11 is a schematic diagram of a process of constructing a face detection model, a face occlusion detection model, and a face attitude angle detection model. Feature information in datasets is extracted through feature engineering (where, for example, the facial information is extracted in this embodiment of this application). The data sets are divided into a training set, a test set, and a validation set. A model parameter is updated based on the training set, a model training effect is evaluated based on the validation set, and a model is filtered based on the test set. The "XX model" shown in FIG. 11 may be any one of the face detection model, the face occlusion detection model, and the face attitude angle detection model.

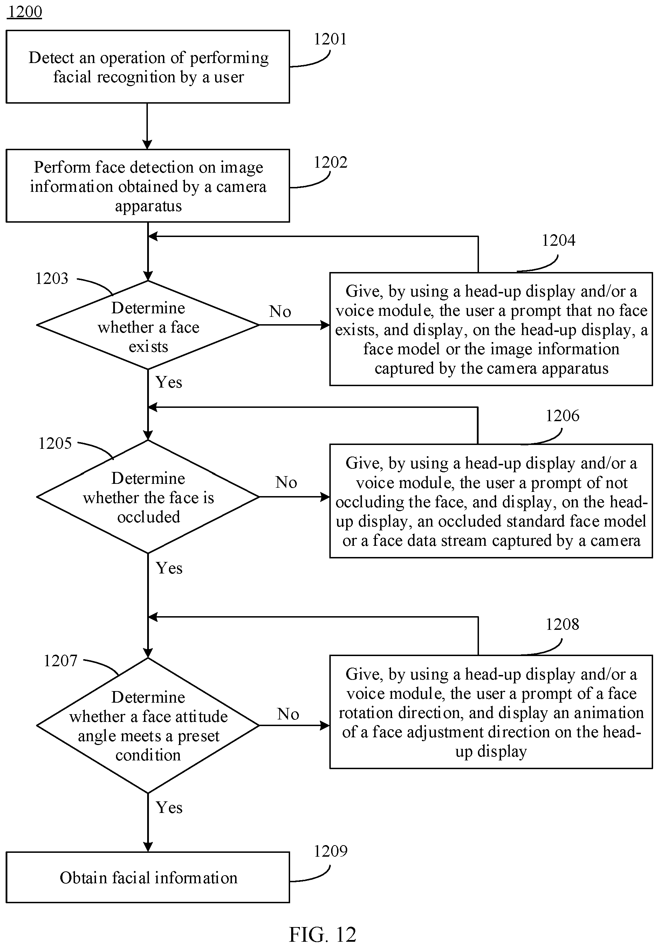

FIG. 12 is a schematic flowchart of a facial recognition method 1200 according to an embodiment of this application. As shown in FIG. 12, the method 1200 includes the following steps.

S1201: Detect an operation of performing facial recognition by a user.

S1202: Perform face detection on image information obtained by a camera apparatus.

S1203: Determine whether a face exists.

After a face detection model performs face detection, a head unit system can output a result about whether the face exists. If the face exists, S1205 is performed; or if no face exists, S1204 is performed.

It should be understood that, for descriptions of S1201 to S1203, refer to the descriptions of S601 to S603. Details are not described herein again.

S1204: If no face exists, give, by using a head-up display and/or a voice module, the user a prompt that no face exists, and display, on the head-up display, a face model or the image information captured by the camera apparatus.

For example, the image information captured by the camera may include information in a cockpit such as a seat or a steering wheel.

In an embodiment, if the image information obtained by the camera apparatus does not include facial information, the head unit system may control the head-up display to display prompt information indicating that no face exists, and may further display, on the head-up display, the image information captured by the camera apparatus. Alternatively, the head unit system may display, on the head-up display, the face model and prompt information indicating that no face exists.

In an embodiment, if the image information obtained by the camera apparatus does not include facial information, the head unit system may control the head-up display to display only prompt information indicating that no face exists.

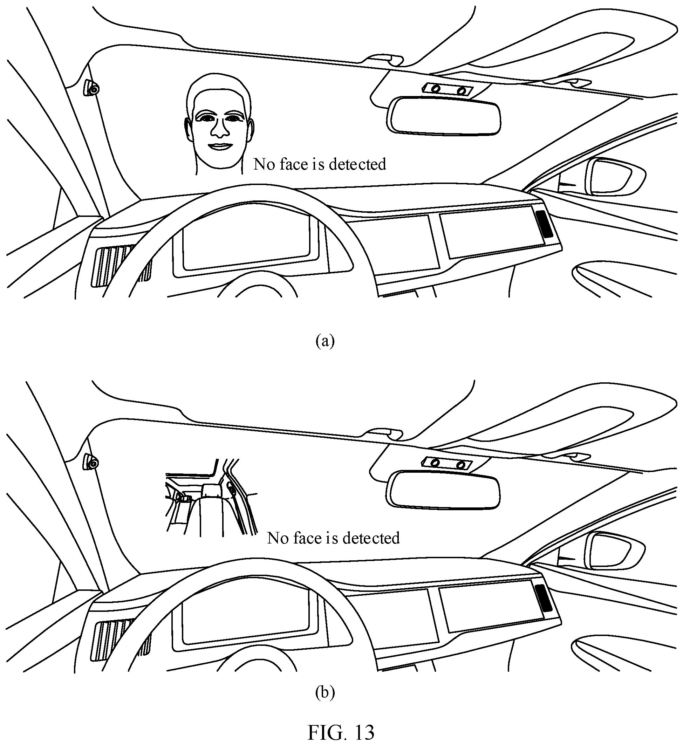

For example, (a) in FIG. 13 is a schematic diagram in which a user is given, by using a head-up display, a prompt that no face exists according to an embodiment of this application. When no face is detected, the head unit system may control the voice module to send voice information "No face is detected" and control the head-up display to display the face model.

For example, (b) in FIG. 13 is another schematic diagram in which a user is given, by using a head-up display, a prompt that no face exists according to an embodiment of this application. When no face is detected, the head unit system may control the voice module to send voice information "No face is detected" and control the head-up display to display the image information captured by the camera apparatus.

S1205: If it is detected that the face exists, determine whether the face is occluded.

For example, when the face detection model determines that the face exists, a face occlusion detection model in a facial information processing module may continue to determine whether the face is occluded. If the face is occluded, S 1206 is performed; or if the face is not occluded, S 1207 is performed.

S1206: If it is detected that the face is occluded, give, by using the head-up display and/or the voice module, the user a prompt of not occluding the face, and display, on the head-up display, the occluded face model or the image information captured by the camera.

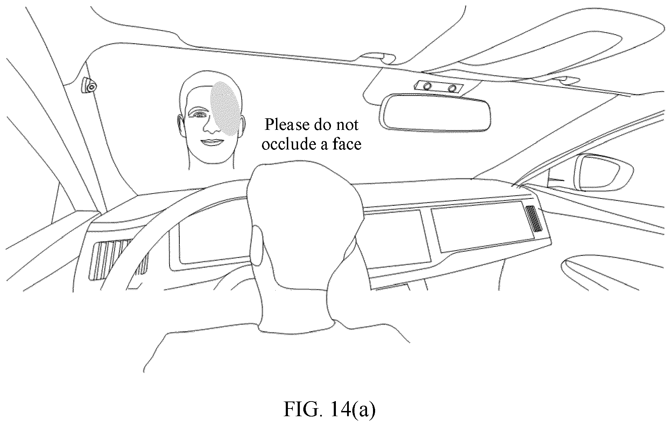

For example, FIG. 14(a) is a schematic diagram in which a user is given, by using a head-up display, a prompt of not occluding a face according to an embodiment of this application. When it is detected that the face is occluded, the head unit system may control the head-up display to display a prompt message "Do not occlude a face" and display the occluded face model.

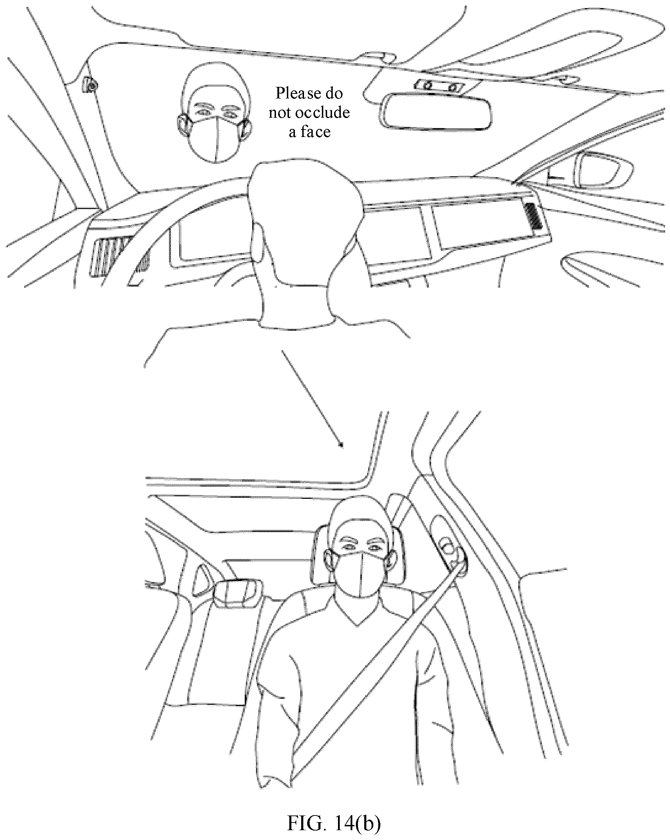

For example, FIG. 14(b) is a schematic diagram in which a user is given, by using a head-up display, a prompt of not occluding a face according to an embodiment of this application. When it is detected that the face of the user is occluded (for example, it is detected that the user wears a mask), the head unit system may control the head-up display to display a prompt message "Do not occlude a face" and display the facial information in the image information captured by the camera.

S1207: If it is detected that the face is not occluded, determine whether a face attitude angle meets a preset condition.

S1208. If it is detected that the face attitude angle does not meet the preset condition, give, by using the head-up display and/or the voice module, the user a prompt of a face rotation direction, and display an animation of a face adjustment direction on the head-up display.

In an embodiment, if it is detected that the face attitude angle does not meet the preset condition, the user may be given, by using a voice and the head-up display, a prompt of the face rotation direction.

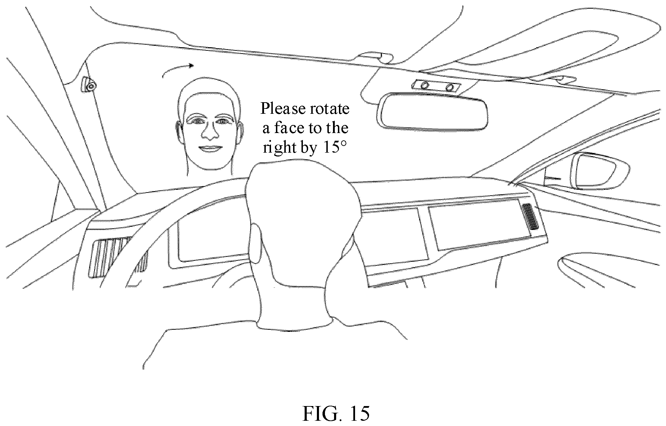

For example, FIG. 15 is a schematic diagram in which a user is given, by using a head-up display, a prompt of a face adjustment direction according to an embodiment of this application. When it is detected that the face attitude angle does not meet the preset condition, the head unit system may control the head-up display to display a prompt message "Please rotate a face to the right by 15°" and display an animation of a face model adjustment direction.

S1209: If it is detected that the face attitude angle meets the preset condition, obtain the facial information.

It should be understood that, for a process of S1209, refer to the process of S609. Details are not described herein again.

In an embodiment, if the operation in S1201 is a face recording operation, the method further includes: storing the feature information of the facial information, to perform comparison and authentication with a facial feature captured in a subsequent identity authentication (for example, unlocking a head unit with a face) process.

It should be understood that, when the operation in S1201 is the face recording operation, the method shown in FIG. 12 may also be referred to as an information recording method.

In an embodiment, if the operation in S1201 is an identity authentication operation, the method further includes: matching feature information of the facial information with a preset facial feature in a vehicle. If the matching succeeds, the identity authentication succeeds. If the matching fails, the authentication fails.

It should be understood that, when the operation in S1201 is the identity authentication operation, the method shown in FIG. 12 may also be referred to as an identity authentication method.

In this embodiment of this application, a face image (for example, a face image or a face model in the image information captured by the camera) is displayed on the head-up display in a facial recognition process, to guide the user to perform facial recognition in a face-to-face manner. This helps improve user interaction experience during facial recognition. In addition, due to a difficulty and effect of displaying the face image on the head-up display, the image information captured by the camera may be replaced with the face model, to guide the user to interact with the face model. This helps improve interaction experience of the user during facial recognition.

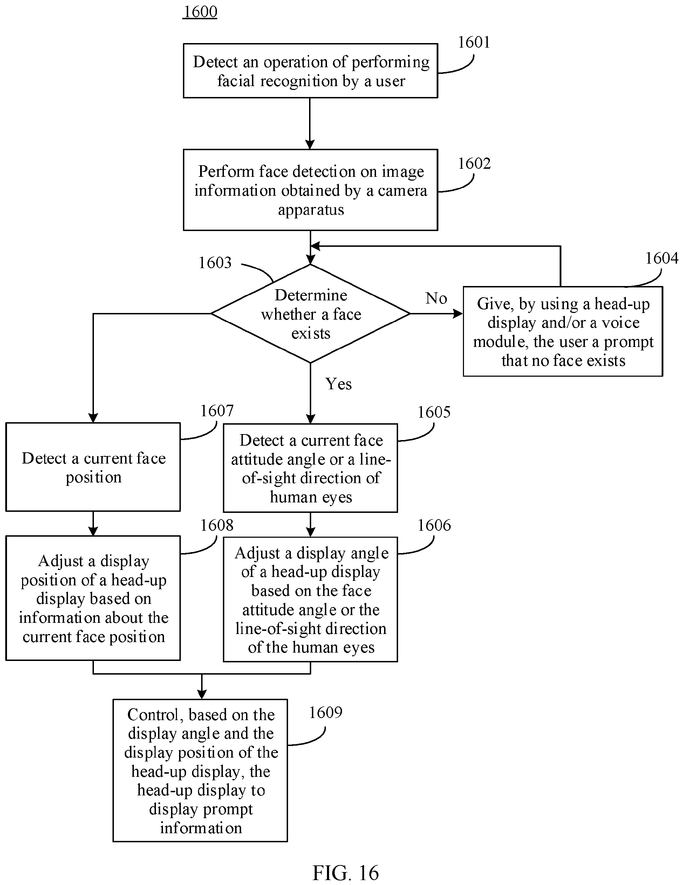

FIG. 16 is a schematic flowchart of a facial recognition method 1600 according to an embodiment of this application. As shown in FIG. 16, the method 1600 includes the following steps.

S1601: Detect an operation of performing facial recognition by a user.

S1602: Perform face detection on image information obtained by a camera apparatus.

S1603: Determine whether a face exists.

After a face detection model performs face detection, a head unit system can output a result about whether the face exists. If the face exists, S1605 to S1609 are performed; or if no face exists, S1604 is performed.

It should be understood that, for descriptions of S1601 to S1603, refer to the descriptions of S601 to S603. Details are not described herein again.

S1604: If no face exists, give, by using a head-up display and/or a voice module, the user a prompt that no face exists.

In an embodiment, if no face exists, the user may be given, by using a voice and the head-up display, a prompt that no face exists.

In an embodiment, if no face exists, the user may be given, by using a voice, a prompt of "Look straight ahead", to guide the user to perform facial recognition.

In an embodiment, if no face exists, the user may be given, by using an image on the head-up display, a prompt that no face exists, to guide the user to perform facial recognition.

S1605: If the face exists, detect a current face attitude angle or a line-of-sight direction of human eyes.

It should be understood that, for a process of detecting the face attitude angle, refer to the descriptions in the foregoing embodiments. Details are not described herein again.

In an embodiment, the head unit system may obtain an image captured by the camera apparatus, and determine, based on a deviation between a center point of an orbit and a center point of a pupil in the image, a position of the pupil in the orbit, to determine the line-of-sight direction of the human eyes. For example, when the center point of the orbit and the center point of the pupil are at a same position, it may be determined that the line-of-sight direction of the human eyes is straight ahead. For another example, when the center point of the pupil is located above the center point of the orbit, it may be determined that the line-of-sight direction of the human eyes is upward. An upward angle may be determined through an angle between a connection line between the center point of the orbit and a preset position and a connection line between the center point of the pupil and the preset position.

In an embodiment, the head unit system may perform, by using a neural network for inference, inference on image data captured by a camera, to obtain the line-of-sight direction of the human eyes in the image data. The neural network may be a neural network trained based on labeled data. For example, when the line-of-sight direction of the human eyes of the user is looking straight ahead, two-dimensional image data captured by the camera may be obtained, and a label indicating that the line-of-sight direction of the human eyes is looking straight ahead is attached to the two-dimensional image data. In this case, the labeled data may be used as data labeled when the line-of-sight direction of the human eyes is looking straight ahead. For another example, when the line-of-sight direction of the human eyes of the user is in a direction of 10° upward, two-dimensional image data captured by the camera may be obtained, and a label indicating that the line-of-sight direction of the human eyes is in a direction of 10° upward is attached to the two-dimensional image data. In this case, the labeled data may be used as data labeled when the line-of-sight direction of the human eyes is in a direction of 10° upward. The neural network is trained by using a plurality of pieces of labeled data, so that the neural network can converge to the optimal.

S1606: Adjust a display angle of the head-up display based on the face attitude angle or the line-of-sight direction of the human eyes.

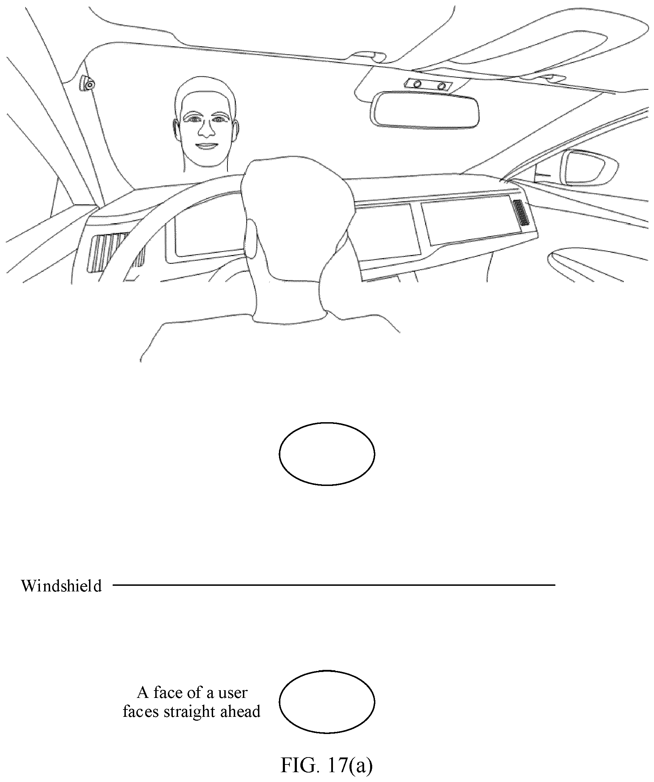

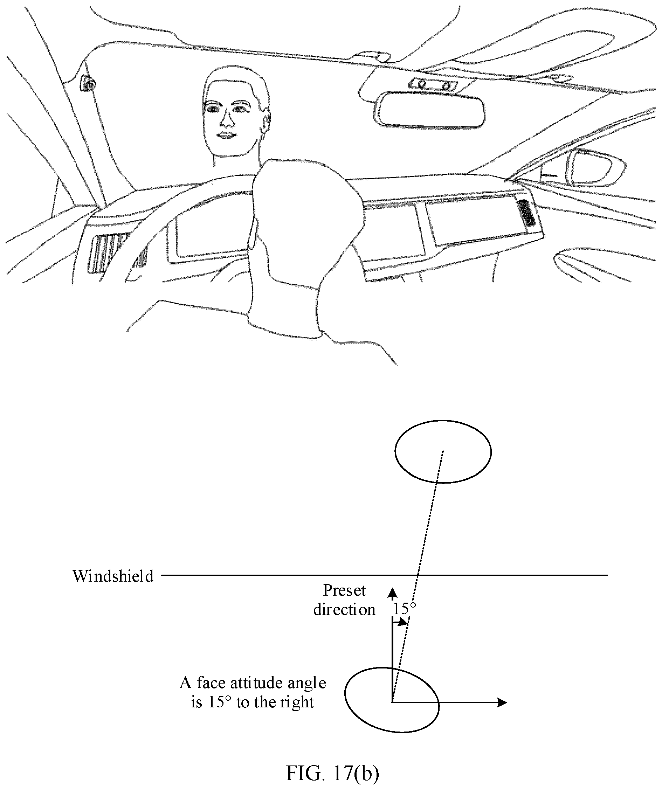

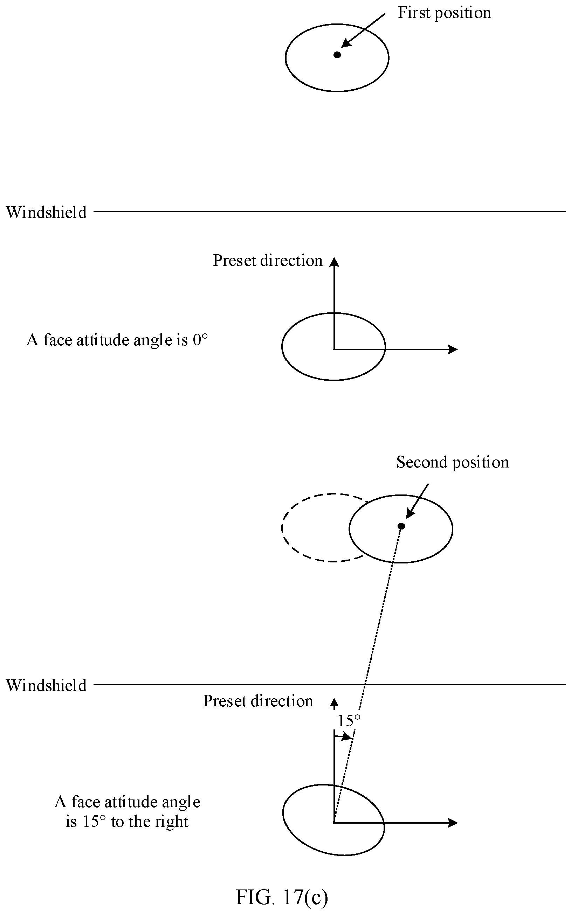

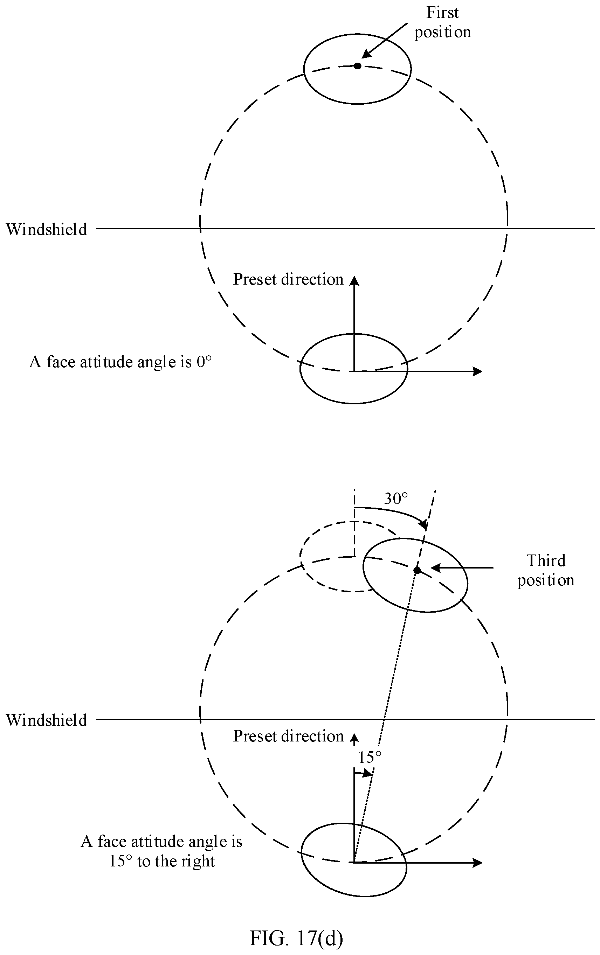

For example, FIG. 17(a), FIG. 17(b), FIG. 17(c), and FIG. 17(d) are schematic diagrams in which a display angle of a head-up display is adjusted according to an embodiment of this application. As shown in FIG. 17(a), when the face attitude angle is 0° (or, a face of the user faces straight ahead at this time), the head unit system may control the head-up display device to display a standard face model directly in front of the face. As shown in FIG. 17(b), when the face attitude angle is 15° to the right, the head unit system may control a display region of the head-up display to appear in a direction of 15° to the right in a preset direction, so that the standard face model is displayed directly in front of the face of the user.

In an embodiment, the display angle of the head-up display may be a deflection angle in a preset direction.

In an embodiment, the preset direction may be a face orientation when the face attitude angle is 0 degrees.

As shown in FIG. 17(c), when the face attitude angle is 0 degrees, a face orientation is parallel to the preset direction. In this case, a position that is of the head-up display and on which facial information is displayed is a first position, and the first position may be in the preset direction. When the face attitude angle is 15° to the right, facial information displayed on the head-up display is translated rightward from the first position to a second position. The second position is in a direction of 15° to the right in the preset direction.

As shown in FIG. 17(d), when the face attitude angle is 15° to the right, the position that is of the head-up display and on which the facial information is displayed is rotated clockwise by 30 degrees from the first position along an arc on which the first position and an actual position of the face are located. In this case, the position that is of the head-up display and on which the facial information is displayed may be updated from the first position to a third position, and the third position is located in a direction of 15° to the right in the preset direction.

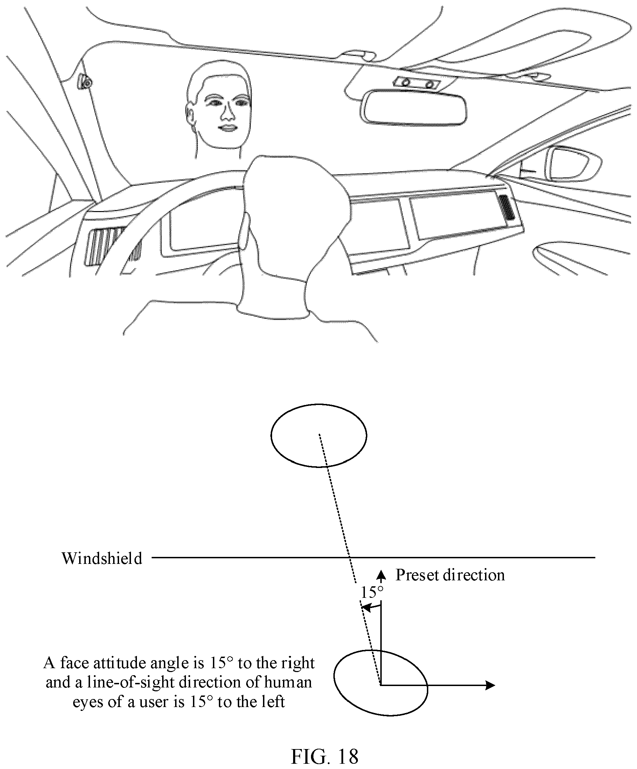

For example, FIG. 18 is a schematic diagram in which a display angle of a head-up display is adjusted according to an embodiment of this application. When the face attitude angle is 15° to the right and the line-of-sight direction of the human eyes of the user is 15° to the left, the head unit system may control the display region of the head-up display device to appear in a direction of 15° to the left in the preset direction, so that the face model is displayed in the line-of-sight direction of the human eyes.

S1607: If the face exists, detect a current face position.

For example, the face position may include information about a face display region in the image information obtained by the camera apparatus. For example, the head unit system may segment facial information and background information (image information other than the facial information) in first image information by using an image segmentation technology, to obtain the information about the face display region in the image information.

For example, the face position may alternatively be located in a rectangular box in the image information. The rectangular box may be represented by coordinates of a plurality of key points. For example, the rectangular box may be represented by coordinates of a first key point and coordinates of a second key point. The first key point may be a point of intersection between a tangent line at an uppermost point of a face contour and a tangent line at a leftmost point of the face contour. The second key point may be a point of intersection between a tangent line at a bottommost point of the face contour and a tangent line at a rightmost point of the face contour.

S1608: Adjust a display position of a head-up display based on information about the current face position.

In an embodiment, adjusting the display position of the head-up display based on the information about the current face position includes: determining, based on the information about the current face position, a height at which the facial information is displayed on the head-up display; and determining the display position of the head-up display based on the height.

For example, if the head unit system may determine a position of the human eyes in the image information based on the face position in the image information captured by the camera apparatus, the head unit system may determine a height from the human eyes to the ground based on the position of the human eyes. The head unit system may determine the display position of the head-up display device based on the height. For example, if the head unit system determines, based on the image information captured by the camera apparatus, that the human eyes in the image information are 1.2 meters away from the ground, the head unit system may control the display position of the head-up display to be 1.2 meters away from the ground, to ensure that prompt information displayed on the head-up display device appears directly in front of the human eyes.

It should be understood that there is no actual sequence between S1605 and S1606 and between S1607 and S1608.

S1609: Control, based on the display angle and the display position of the head-up display, the head-up display to display the prompt information, where the prompt information is used to guide the user to perform facial recognition.

In an embodiment, if the operation in S1601 is a face recording operation, the prompt information may be used to guide the user to record facial information. The method further includes: obtaining the facial information.

It should be understood that, when the operation in S 1601 is the face recording operation, the method shown in FIG. 16 may also be referred to as an information recording method.

In an embodiment, if the operation in S1601 is an identity authentication operation, the prompt information may be used to guide the user to perform identity authentication. The method further includes: obtaining the facial information, and matching feature information of the facial information with a preset facial feature in a vehicle. If the matching succeeds, the identity authentication succeeds. If the matching fails, the authentication fails.

It should be understood that, when the operation in S 1601 is the identity authentication operation, the method shown in FIG. 16 may also be referred to as an identity authentication method.

In this embodiment of this application, in combination of differences of different users such as heights and sitting postures, the display angle and the position of the head-up display are adjusted, to meet interaction experience of the different users when facial recognition is performed.

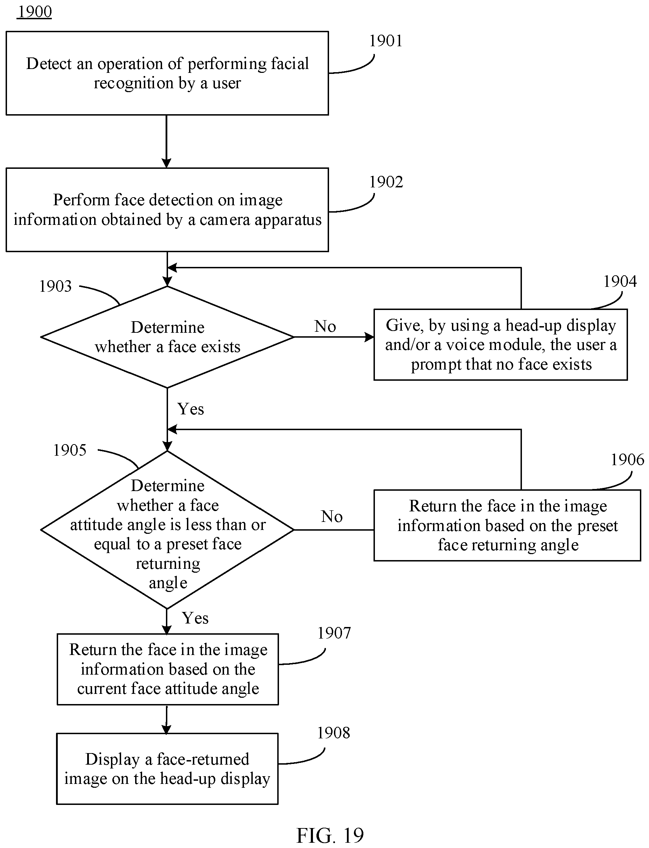

FIG. 19 is a schematic flowchart of a facial recognition method 1900 according to an embodiment of this application. As shown in FIG. 19, the method 1900 includes the following steps.

S1901: Detect an operation of performing facial recognition by a user.

S1902: Perform face detection on image information obtained by a camera apparatus.

S1903: Determine whether a face exists.

After a face detection model performs face detection, a head unit system can output a result about whether the face exists. If the face exists, S1905 is performed; or if no face exists, S1904 is performed.

It should be understood that, for descriptions of S1901 to S1903, refer to the descriptions of S601 to S603. Details are not described herein again.

S1904: If no face exists, give, by using a head-up display and/or a voice module, the user a prompt that no face exists.

In an embodiment, if no face exists, the user may be given, by using a voice and the head-up display, a prompt that no face exists.

In an embodiment, if no face exists, the user may be given, by using a voice, a prompt of "Look straight ahead", to guide the user to perform facial recognition.

In an embodiment, if no face exists, the user may be given, by using an image on the head-up display, a prompt that no face exists, to guide the user to perform facial recognition.

S1905: If it is detected that the face exists, determine whether a face attitude angle is less than or equal to a preset face returning angle. If the face attitude angle meets the preset face returning angle setting, S1907 is performed; or if the face attitude angle does not meet the preset face returning angle, S1906 is performed.

In an embodiment, the preset face returning angle may be determined based on an installation position of the camera apparatus and a display position of the head-up display. For example, the preset face returning angle may be determined based on an included angle between a connection line between the installation position of the camera apparatus and a first preset position and a connection line between the display position of the head-up display and the first preset position.

In an embodiment, the preset face returning angle may include preset face returning angles in directions of an x axis, a y axis, and a z axis. For example, the preset face returning angle on the x axis is 20°, the preset face returning angle on the y axis is 30°, and the preset face returning angle on the z axis is 15°.

S1906: If the face attitude angle is greater than the preset face returning angle, return the face in the image information based on the preset face returning angle.

For example, an attitude angle of the face in the image information captured by the camera is (0°, 35°, 0°), indicating that the face of the user is deflected by 35° in a positive direction of the y axis. If the angle is greater than the preset face returning angle (for example, 30°) on the y axis, the head unit system may deflect the face in the image information by 30° toward a negative direction of the y axis, to obtain image information whose face attitude angle is (0°, 5°, 0°).

In an embodiment, if the face attitude angle is greater than the preset face returning angle, the head-up display and/or the voice module may be used to prompt the user with a face rotation direction, to guide the user to rotate the face, so that the face attitude is less than the preset face returning angle.

In an embodiment, if the face attitude angle is greater than the preset face returning angle, a spatial position at which the camera apparatus captures an image may be adjusted, to reduce a user requirement for adjusting a face position of the user. For example, if the camera apparatus is a camera apparatus that can be lifted and/or rotated, a height and/or a rotation angle of the camera apparatus may be adjusted, to capture an image at a better image shooting angle, so that a face attitude angle in the captured image is less than the preset return angle.

S1907: If the face attitude angle is less than or equal to the preset face returning angle, return the face in the image information based on a current face attitude angle.

For example, an attitude angle of the face in the image information captured by the camera is (0°, 15°, 0°), indicating that the face of the user is deflected by 15° in a positive direction of the y axis. If the angle is less than the preset face returning angle (for example, 30°) on the y axis, the head unit system may deflect the face in the image information by 15° toward a negative direction of the y axis, to obtain image information whose face attitude angle is (0°, 0°, 0°).

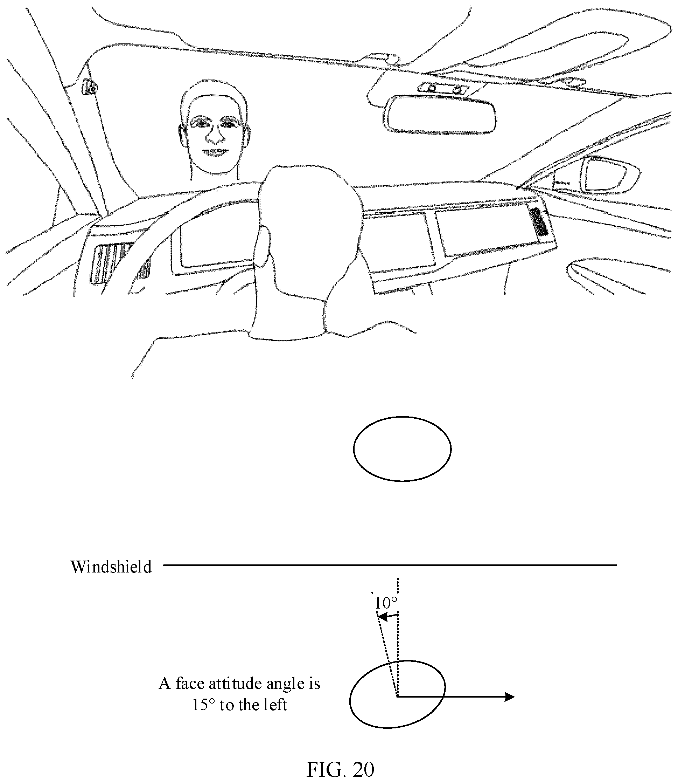

FIG. 20 is a schematic diagram in which facial information is displayed on a head-up display according to an embodiment of this application. When it is detected that the face attitude angle is 10° to the left and the preset face returning angle is 30°, the face in the image information may be returned based on the current face attitude angle, so that the user views an image of a front face on the head-up display.

S1908: Display a face-returned image on the head-up display.

In an embodiment, a display region of a face position in the image information may be further adjusted based on a distance between the face position in the image information captured by the camera apparatus and a first region that is of the head-up display and in which the face is displayed, so that the display region of the face position is in the first region.

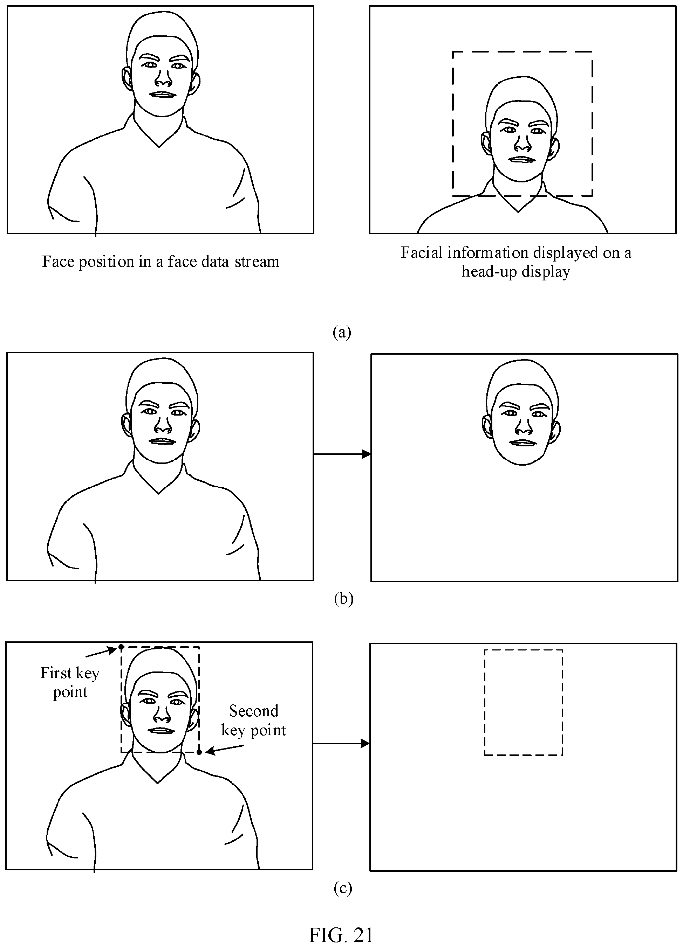

FIG. 21 is a schematic diagram in which a face position is adjusted according to an embodiment of this application. As shown in (a) in FIG. 21, the first region that is of the head-up display and in which the face is displayed is a display region in a dotted box. If the face position in the image information is a position above the middle of the image, the face position may be adjusted downward, so that the face position is displayed in the dotted box.

Optionally, as shown in (b) in FIG. 21, the face position may include information about a face display region in the image information. For example, a vehicle may segment facial information and background information (image information other than the facial information) in the image information by using an image segmentation technology, to obtain information about the face display region in the image information.

Optionally, as shown in (c) in FIG. 21, the face position may also be in a rectangular box in the image information. The rectangular box may be represented by coordinates of a plurality of key points. For example, the rectangular box may be represented by coordinates of a first key point and coordinates of a second key point. The first key point may be a point of intersection between a tangent line at an uppermost point of a face contour and a tangent line at a leftmost point of the face contour. The second key point may be a point of intersection between a tangent line at a bottommost point of the face contour and a tangent line at a rightmost point of the face contour.

In an embodiment, if the operation in S1901 is a face recording operation, the method further includes: obtaining the facial information, to perform comparison and authentication with a facial feature captured in a subsequent identity authentication (for example, unlocking a head unit with a face) process.

It should be understood that, when the operation in S1901 is the face recording operation, the method shown in FIG. 19 may also be referred to as an information recording method.

In an embodiment, if the operation in S1901 is an identity authentication operation, the method further includes: obtaining the facial information, and matching feature information of the facial information with a preset facial feature in the vehicle. If the matching succeeds, the identity authentication succeeds. If the matching fails, the authentication fails.

It should be understood that, when the operation in S1901 is the identity authentication operation, the method shown in FIG. 19 may also be referred to as an identity authentication method.

In this embodiment of this application, because an angle difference exists between an installation position of the camera and a display device (for example, an in-vehicle display), if the face is facing the display device in a facial recognition process, a face in the display device has a specific deflection angle. The face in the image information is returned based on the face attitude angle in the image information, to ensure that the user views the front face, and help improve interaction experience of the user.

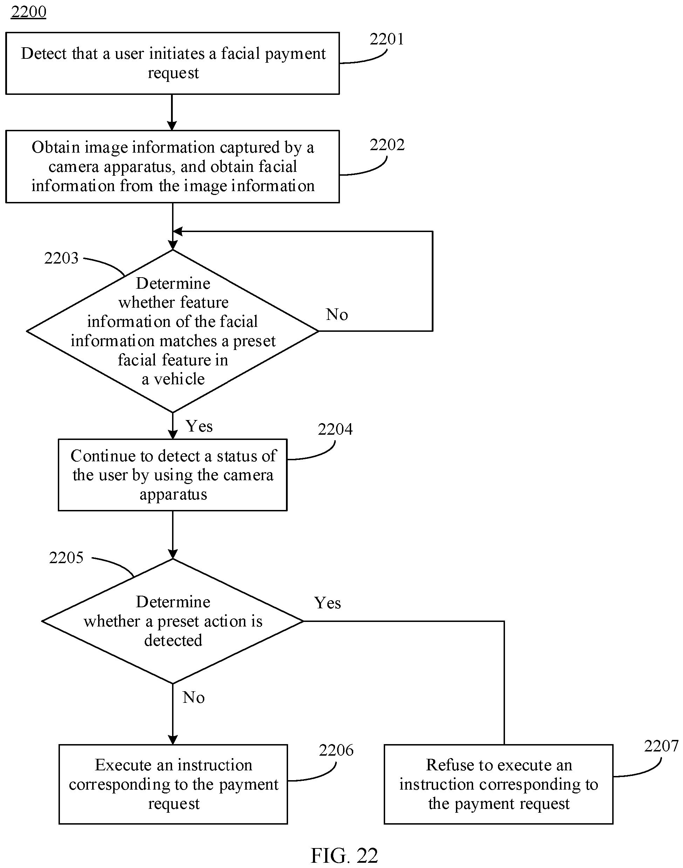

FIG. 22 is a schematic flowchart of a facial recognition method 2200 according to an embodiment of this application. As shown in FIG. 22, the method 2200 includes the following steps.

S2201: Detect that a user initiates a facial payment request.

For example, that the user initiates the facial payment request may be that the user initiates the facial payment request by using a shopping application in a head unit system, or the user may initiate the facial payment request by using a voice instruction.

S2202: Obtain image information captured by a camera apparatus, and obtain facial information from the image information.

S2203: Determine whether feature information of the facial information matches a preset facial feature in a vehicle.

If the feature information of the facial information matches the preset facial feature in the vehicle, S2204 is performed; or if the feature information of the facial information does not match the preset facial feature in the vehicle, step S2203 is performed.

S2204: If the feature information of the facial information matches the preset facial feature in the vehicle, continue to detect a status of the user by using the camera apparatus.

For example, in first preset duration after the feature information of the facial information successfully matches the preset facial feature in the vehicle, the status of the user continues to be detected based on the image information captured by the camera apparatus.

S2205: Determine whether a preset action of the user is detected.

For example, the preset action includes but is not limited to an action like head shaking and blinking of the user. For example, when a head shaking frequency of the user is greater than or equal to a first frequency threshold, it may be determined that the preset action is detected; or when a blinking frequency of the user is greater than or equal to a second frequency threshold, it may be determined that the preset action is detected.

S2206: If the preset operation is not detected, execute an instruction corresponding to the payment request.

S2207: If the preset operation is detected, refuse to execute an instruction corresponding to the payment request.

In this embodiment of this application, the status of the user continues to be detected after the facial feature is successfully matched, which helps improve control permission of the user in a facial payment process, and prevents a payment operation from being directly generated after face authentication because the user mistakenly triggers facial payment. This helps improve security of facial payment.

It should be understood that the method 2200 is described by using facial payment as an example, and this embodiment of this application may be further applied to another scenario. For example, the method may be further applied to scenarios such as unlocking a head unit with a face, and seat adjustment.

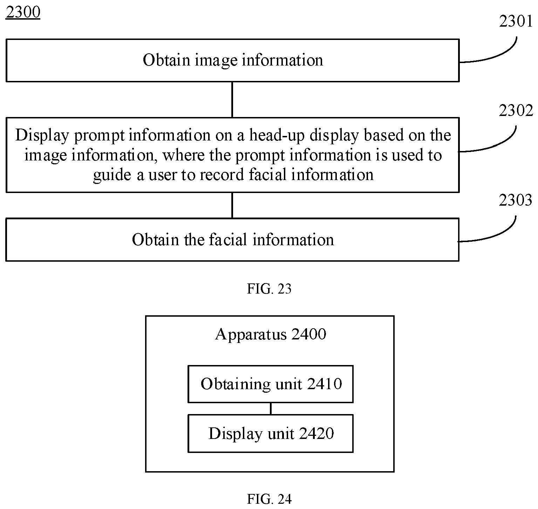

FIG. 23 is a schematic flowchart of an information recording method 2300 according to an embodiment of this application. As shown in FIG. 23, the method 2300 includes the following steps.

S2301: Obtain image information.

Optionally, before a vehicle obtains the image information, the method further includes: The vehicle detects an operation of requesting information (for example, facial information) recording by a user. That the vehicle obtains the image information includes: The vehicle obtains the image information in response to the detected operation.

For example, when the vehicle detects a voice instruction of the user (for example, a voice instruction "Start face recording" sent by the user), the vehicle may be triggered to obtain the image information; or when the vehicle detects an operation of the user on a display (for example, an operation of tapping a face recording control by the user), the vehicle may be triggered to obtain the image information.

S2302: Display prompt information on a head-up display based on the image information, where the prompt information is used to guide the user to record the facial information.

In this embodiment of this application, when the user records the facial information, the prompt information for guiding the user to record the facial information is displayed on the head-up display, so that the user completes recording of the facial information based on the prompt information on the head-up display, without a need to take a camera and a display into consideration. This helps improve convenience of vehicle information recording, thereby improving user experience.

Optionally, before the vehicle displays the prompt information on the head-up display, the method further includes: The vehicle determines a position, in the vehicle, of a user whose facial information needs to be recorded.

For example, before the vehicle obtains the captured image information, the vehicle receives the voice instruction (for example, "Start face recording") sent by the user. The vehicle may determine, based on a microphone array, an orientation of the user who sends the voice instruction.

For example, if the vehicle determines, based on the microphone array, that the voice instruction is sent by a user in a driver region, the vehicle may display the prompt information on a head-up display in the driver region, to guide the user in the driver region to record facial information.

For another example, if the vehicle determines, based on the microphone array, that the voice instruction is sent by a user in a front passenger region, the vehicle may display the prompt information on a head-up display in the front passenger region, to guide the user in the front passenger region to record facial information.

For another example, if the vehicle determines, based on the microphone array, that the voice instruction is sent by a user in a second left passenger region, the vehicle may display the prompt information on an entertainment screen in the second left passenger region (for example, the entertainment screen may be located on a back of a driver region seat), to guide the user in the second left passenger region to record facial information.

For example, the vehicle may display the prompt information by default on the head-up display in the driver region. For example, after detecting that the user initiates a facial information recording request, the vehicle may display the prompt information on the head-up display in the driver region. After detecting a preset gesture of the user, the vehicle may switch to another display apparatus to display the prompt information.

In an embodiment, by using different preset gestures, the vehicle may switch the prompt information to different display apparatuses for display.

For example, when the vehicle detects, by using a central control screen, an operation of sliding two fingers of the user from left to right of the central control screen, the vehicle may switch to display the prompt information on the head-up display in the front passenger region.

For another example, when the vehicle detects, by using a central control screen, an operation of sliding three fingers of the user from an upper side to a lower side of the central control screen, the vehicle may switch to display the prompt information on the entertainment screen in the second left passenger region.

Optionally, the prompt information may include text prompt information. For example, as shown in FIG. 7, if the vehicle determines that the image information does not include a face, the vehicle may display text prompt information "No face is detected" on the head-up display. For another example, as shown in FIG. 8, if the vehicle determines that a face in the image information is occluded, the vehicle may display text prompt information "Please do not occlude a face" on the head-up display. For another example, as shown in FIG. 10, if the vehicle determines that a face attitude angle in the image information does not meet a preset condition, the vehicle may display text prompt information "Please rotate a face to the right by 15°" on the head-up display.

Optionally, the prompt information may include a face image, and the face image is determined based on the image information, or the face image is a face model.

Optionally, the face image may be a face image obtained by adjusting the face attitude angle in the image information, or the face image may be a face image obtained by returning the face in the image information.

For example, the face image may be the face model. As shown in (a) in FIG. 13, when detecting that the image information does not include the face, the vehicle may display the face model and the text prompt information (for example, "No face is detected").

For example, as shown in FIG. 14(a), when detecting that the face in the image information is occluded, the vehicle may display an occluded face model and the text prompt information (for example, "Please do not occlude a face").

Optionally, that the vehicle displays the prompt information on the head-up display based on the image information includes: The vehicle adjusts the face in the image information based on the face attitude angle in the image information, to obtain the face image, and the vehicle displays the face image on the head-up display.

For example, as shown in FIG. 20, when it is detected that the face attitude angle is 10° to the left and a preset face returning angle is 30°, the face in the image information may be returned based on a current face attitude angle, so that the user views an image of a front face on the head-up display.

Optionally, the vehicle may adjust the face in the image information, so that the vehicle displays the face image on the head-up display. Alternatively, the vehicle may adjust a spatial position at which a camera apparatus captures an image, to reduce a user requirement for adjusting a face position of the user. For example, there are a plurality of camera apparatuses in a cockpit, and a camera apparatus with a more appropriate image shooting angle may be used to capture an image, or images captured by the plurality of camera apparatuses may be fused. For another example, if the camera apparatus is, for example, a camera apparatus that can be lifted and/or rotated, a height and/or a rotation angle of the camera apparatus may be adjusted, to capture an image at a better image shooting angle, so as to obtain the image of the front face.

Optionally, before the vehicle adjusts the face in the image information based on the face attitude angle, to obtain the facial image, the method further includes: The vehicle determines that the face attitude angle is less than or equal to the preset face returning angle.

Optionally, that the vehicle displays the prompt information on the head-up display based on the image information includes: The vehicle adjusts a display region of the face image based on a distance between a face position in the facial information and a first region for displaying the face, so that the face image is displayed in the first region.

For example, as shown in FIG. 21, when the face position in the image information is upward, the face position may be adjusted downward, so that the face position is located in a target region (for example, a region in a dotted box) displayed on the head-up display.

Optionally, that the vehicle displays the prompt information on the head-up display based on the image information includes: The vehicle displays the prompt information on the head-up display based on the face attitude angle in the image information.

For example, as shown in FIG. 17(b), when the face attitude angle is 15° to the right, the face image displayed on the head-up display may be displayed in a direction of 15° to the right in a preset direction, so that the face image appears in a direction of a face orientation of the user, and face-to-face interaction experience can be provided to the user. This helps improve user experience of the user during recording of the facial information.

Optionally, that the vehicle displays the prompt information on the head-up display based on the face attitude angle in the image information includes: The vehicle determines a display angle of the prompt information based on the face attitude angle, and the vehicle displays the prompt information on the head-up display based on the display angle.

Optionally, that the vehicle displays the prompt information on the head-up display based on the image information includes: The vehicle displays the prompt information on the head-up display based on a line-of-sight direction of human eyes in the image information.

For example, as shown in FIG. 18, when the face attitude angle is 15° to the right and the line-of-sight direction of the human eyes of the user is 15° to the left, the face image displayed on the head-up display may be displayed in a direction of 15° to the left in the preset direction, so that the face image appears in the line-of-sight direction of the human eyes of the user, and face-to-face interaction experience can be provided to the user. This helps improve user experience of the user during recording of the facial information.

Optionally, that the vehicle displays the prompt information on the head-up display based on the line-of-sight direction of the human eyes in the image information includes: The vehicle determines a display angle of the prompt information based on the line-of-sight direction of the human eyes, and the vehicle displays the prompt information on the head-up display based on the display angle.

Optionally, that the vehicle displays the prompt information on the head-up display based on the image information includes: The vehicle determines, based on the face position in the image information, a height for displaying the prompt information on the head-up display, and displays the prompt information on the head-up display device based on the height.

In this embodiment of this application, the height at which the face position is displayed on the head-up display may vary with a height of the face of the user. The vehicle may determine, based on the face position in the image information, the height for displaying the prompt information on the head-up display, to control the head-up display to display the prompt information at the corresponding height. In this way, the user does not need to look down or look up at the prompt information. This helps improve user experience during facial information recording.

Optionally, the method further includes: performing identity authentication based on feature information of the facial information.

Optionally, before the identity authentication is performed based on the feature information of the facial information, the method further includes: detecting that the user initiates a first request.

For example, the first request includes but is not limited to a payment request, a head unit unlocking request, a seat adjustment request, and the like.

Optionally, the method further includes: if a preset operation of the user is detected within preset duration after the identity authentication succeeds, refusing to execute an instruction corresponding to the first request.

Optionally, the preset operation includes but is not limited to an operation like head shaking or blinking of the user.

In this embodiment of this application, when determining that the identity authentication succeeds, the vehicle may further continue to detect behavior of the user within the preset duration. If the preset operation of the user is detected within the preset duration, the vehicle may refuse to execute the instruction corresponding to the first request. This helps improve the user's control over face authentication and ensures security and controllability of the face authentication.

Optionally, the method is applied to a transportation means, and the transportation means includes a central control screen; and that the image information is obtained includes that the image information captured by a camera is obtained, where an angle formed by a connection line between an installation position of the camera and a preset position and a connection line between a position of the central control screen and the preset position is greater than or equal to a preset value.

Optionally, the preset value may be a value in a preset interval.

For example, the preset value may be a value within [20°, 60°]. For example, the preset value may be 30°.

Optionally, the position of the central control screen may be represented by a position of a point (for example, a center point) on the central control screen.

Optionally, the preset position may be a position of a display region of the head-up display. For example, the position of the display region of the head-up display may be represented by a position of a point (for example, a center point) in the display region.

Optionally, the angle formed by the connection line between the installation position of the camera and the preset position and the connection line between the position of the central control screen and the preset position may be calculated before the transportation means leaves the factory. It may be determined, by determining a relationship between the angle and the preset value, whether to display the prompt information on the head-up display. For example, if the angle is 40° (greater than a preset value 30°), a correspondence between a display apparatus that displays the prompt information and the head-up display may be preset in the transportation means. Therefore, when detecting that the user initiates the information recording request, the transportation means may determine, based on the correspondence, to display the prompt information on the head-up display rather than display the prompt information on the central control screen.

Optionally, the angle formed by the connection line between the installation position of the camera and the preset position and the connection line between the position of the central control screen and the preset position may be calculated by the transportation means in real time. For example, the image information in S2301 is obtained by a first camera apparatus. When detecting that the user initiates the information recording request, the transportation means may control a second camera apparatus in a cockpit to capture another piece of image information including the first camera apparatus and the central control screen, and convert position information of the first camera apparatus, position information of the central control screen, and position information of the display region of the head-up display into a vehicle coordinate system (a three-dimensional coordinate system) based on the another piece of image information, to determine the angle. If the angle is 40° (greater than the preset value 30°), the head-up display may be controlled to display the prompt information based on the image information.

Optionally, the method further includes: giving the user a prompt of voice information based on the image information, where the voice information is used to guide the user to record the facial information.

In this embodiment of this application, the prompt information is displayed on the head-up display; in addition, the user may further be guided by using a voice to record the facial information. This helps facilitate the user to complete facial information recording after viewing the prompt information and hearing the voice information, and helps improve user experience during facial information recording of the user.

Optionally, that the vehicle displays the prompt information on the head-up display based on the image information includes: When no face exists in the image information, the vehicle gives, by using the head-up display, the user a prompt that no facial information is detected; when the face in the image information is occluded, the vehicle gives, by using the head-up display, the user a prompt of not occluding the face; and/or when the face attitude angle in the image information is greater than or equal to a preset threshold, the vehicle gives, by using the head-up display, the user a prompt of a direction in which the face needs to be rotated.

In this embodiment of this application, when there is no facial information in the image information, when the face in the image information is occluded, or when the face attitude angle in the image information is greater than or equal to the preset threshold, a corresponding prompt may be given to the user by using the head-up display. This helps guide a user to complete the facial information recording process, and helps improve user experience during facial information recording.

S2303: Obtain the facial information.

For example, the vehicle may obtain the facial information in a process of guiding the user to record the facial information.

In an embodiment, that the facial information is obtained includes: If the face exists in the image information, the face in the image information is not occluded, and the face attitude angle meets the preset condition, the vehicle obtains the facial information in the image information.

In an embodiment, that the facial information is obtained includes: If no face exists in the image information, the face in the image information is occluded, or the face attitude angle in the image information does not meet the preset condition, after the user is prompted correspondingly based on the prompt information displayed on the head-up display, a new image is obtained and the facial information is obtained from the new image.

It should be understood that the method 2300, the method 600, the method 1200, the method 1600, the method 1900, and the method 2200 may be mutually combined.

Embodiments of this application further provide an apparatus configured to implement any one of the foregoing methods. For example, embodiments of this application provide an apparatus including units (or means) configured to implement the steps performed by the vehicle or the head unit system in any one of the foregoing methods.

For example, FIG. 24 is a schematic diagram of an information recording apparatus 2400 according to an embodiment of this application. The apparatus includes an obtaining unit and a display unit. The obtaining unit 2410 is configured to obtain image information. The display unit 2420 is configured to display prompt information on a head-up display based on the image information, where the prompt information is used to guide a user to record facial information. The obtaining unit 2410 is further configured to obtain the facial information.

Optionally, the prompt information includes a face image, and the face image is determined based on the image information, or the face image is a face model.

Optionally, the display unit 2420 is specifically configured to: adjust a face in the image information based on a face attitude angle in the image information, to obtain the face image; and display the face image on the head-up display.

Optionally, the display unit 2420 is specifically configured to adjust a display region of the face image based on a distance between a face position in the image information and a first region for displaying the face, so that the face image is displayed in the first region.

Optionally, the display unit 2420 is specifically configured to display the prompt information on the head-up display based on the face attitude angle in the image information.

Optionally, the display unit 2420 is specifically configured to: determine a display angle of the prompt information based on the face attitude angle; and display the prompt information on the head-up display based on the display angle.

Optionally, that the display unit 2420 is specifically configured to: the displaying prompt information on a head-up display based on the image information includes: display the prompt information on the head-up display based on a line-of-sight direction of human eyes in the image information.

Optionally, the display unit 2420 is specifically configured to: determine a display angle of the prompt information based on the line-of-sight direction of the human eyes; and display the prompt information on the head-up display based on the display angle.

Optionally, the display unit 2420 is specifically configured to: determine, based on the face position in the image information, a height for displaying the prompt information on the head-up display; and display the prompt information on the head-up display based on the height.

Optionally, the apparatus is located in a transportation means, and the transportation means includes a central control screen; and that the image information is obtained includes that the image information captured by a camera is obtained, where an angle formed by a connection line between an installation position of the camera and a preset position and a connection line between a position of the central control screen and the preset position is greater than or equal to a preset value.

Optionally, the apparatus further includes a voice prompt unit, configured to give the user a prompt of voice information, where the voice information is used to guide the user to record the facial information.

Optionally, the display unit 2420 is specifically configured to: when no face exists in the image information, give, by using the head-up display, the user a prompt that no face is detected; when the face in the image information is occluded, give, by using the head-up display, the user a prompt of not occluding the face; and/or when the face attitude angle in the image information is greater than or equal to a preset threshold, give, by using the head-up display, the user a prompt of a direction in which the face needs to be rotated.

Optionally, the apparatus further includes an authentication unit, configured to perform identity authentication based on feature information of the facial information.

Optionally, the obtaining unit 2410 is further configured to obtain image information. The display unit 2420 is further configured to display prompt information on a head-up display based on the image information, where the prompt information is used to guide a user to record biometric feature information. The obtaining unit is further configured to obtain the biometric feature information.

The obtaining unit is configured to obtain the image information from an image sensor (for example, a camera). The display unit is configured to control a display apparatus to display the prompt information, and further display the prompt information by using the display apparatus. The voice prompt unit is configured to control a voice module (for example, a speaker) to play voice information, and further give the user a prompt of the voice information.

It should be understood that division into units in the foregoing apparatus is merely logical function division. During actual implementation, all or some of the units may be integrated into one physical entity or may be physically separated. In addition, the units in the apparatus may be implemented in a form of software invoked by a processor. For example, the apparatus includes the processor, the processor is connected to a memory, the memory stores instructions, and the processor invokes the instructions stored in the memory, to implement any one of the foregoing methods or implement functions of each unit of the apparatus. The processor is, for example, a general purpose processor like a CPU or a microprocessor. The memory is a memory inside the apparatus or a memory outside the apparatus. Alternatively, the units in the apparatus may be implemented in a form of a hardware circuit, and functions of some or all of the units may be implemented by designing the hardware circuit. The hardware circuit may be understood as one or more processors. For example, in an implementation, the hardware circuit is an ASIC, and functions of some or all of the foregoing units are implemented by designing a logical relationship between elements in the circuit. For another example, in another implementation, the hardware circuit may be implemented by using a PLD. An FPGA is used as an example. The hardware circuit may include a large quantity of logic gate circuits, and a connection relationship between the logic gate circuits is configured by using a configuration file, to implement functions of some or all of the foregoing units. All units of the foregoing apparatus may be implemented in a form of software invoked by a processor, or all units may be implemented in a form of a hardware circuit, or some units may be implemented in a form of software invoked by a processor, and a remaining part may be implemented in a form of a hardware circuit.

In this embodiment of this application, the processor is a circuit that has a signal processing capability. In an implementation, the processor may be a circuit that has instruction reading and running capabilities, for example, a CPU, a microprocessor, a GPU, or a DSP. In another implementation, the processor may implement a function based on a logical relationship of a hardware circuit. The logical relationship of the hardware circuit is fixed or reconfigurable. For example, the processor is a hardware circuit implemented by using an ASIC or a PLD, for example, an FPGA. In the reconfigurable hardware circuit, a process in which the processor loads a configuration document to implement hardware circuit configuration may be understood as a process in which the processor loads instructions to implement functions of some or all of the foregoing units. In addition, the processor may be a hardware circuit designed for artificial intelligence, and may be understood as an ASIC, for example, an NPU, a TPU, or a DPU.

It can be learned that each unit in the foregoing apparatus may be one or more processors (or processing circuits) configured to implement the foregoing method, for example, a CPU, a GPU, an NPU, a TPU, a DPU, a microprocessor, a DSP, an ASIC, or an FPGA, or a combination of at least two of these processor forms.

In addition, all or some of the units in the foregoing apparatus may be integrated, or may be independently implemented. In an implementation, these units are integrated and implemented in a system-on-a-chip (system-on-a-chip, SOC) form. The SOC may include at least one processor, configured to implement any one of the foregoing methods or implement functions of units of the apparatus. The at least one processor may be of different types, for example, include a CPU and an FPGA, a CPU and an artificial intelligence processor, a CPU and a GPU, and the like.

An embodiment of this application further provides an apparatus. The apparatus includes a processing unit and a storage unit. The storage unit is configured to store instructions, and the processing unit executes the instructions stored in the storage unit, to enable the apparatus to perform the method or step performed in the foregoing embodiments.

Optionally, if the apparatus is located in a vehicle, the processing unit may be the processors 151 to 15n shown in FIG. 1.

An embodiment of this application further provides a transportation means. The transportation means may include the apparatus 2400.

Optionally, the transportation means may be a vehicle.

An embodiment of this application further provides a computer program product. The computer program product includes computer program code. When the computer program code is run on a computer, the computer is enabled to perform the method.

An embodiment of this application further provides a computer-readable medium. The computer-readable medium stores program code. When the computer program code is run on a computer, the computer is enabled to perform the method.

In an implementation process, steps in the foregoing methods can be completed by using a hardware integrated logical circuit in the processor, or by using instructions in a form of software. The method disclosed with reference to embodiments of this application may be directly performed by a hardware processor, or may be performed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be understood that, in embodiments of this application, the memory may include a read-only memory and a random access memory, and provide instructions and data to the processor.

It should be understood that sequence numbers of the foregoing processes do not mean execution sequences in various embodiments of this application. The execution sequences of the processes should be determined based on functions and internal logic of the processes, but should not be construed as any limitation on the implementation processes in embodiments of this application.

A person of ordinary skill in the art may be aware that the units and algorithm steps described with reference to the examples in embodiments disclosed in this specification may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiments are merely examples. For example, division of the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form.

The units described as separate parts may or may not be physically separate, and parts displayed as units may or may not be physical units, and may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An information recording method, comprising:
obtaining image information;
displaying prompt information on a head-up display based on the image information, wherein the prompt information is used to guide a user to record facial information; and
obtaining the facial information.

2. The method according to claim 1, wherein the prompt information comprises a face image, and the face image is determined based on the image information, or the face image is a face model.

3. The method according to claim 2, wherein the displaying prompt information on a head-up display based on the image information comprises:
adjusting a face in the image information based on a face attitude angle in the image information, to obtain the face image; and
displaying the face image on the head-up display.

4. The method according to claim 2 or 3, wherein the displaying prompt information on a head-up display based on the image information comprises:
adjusting a display region of the face image based on a distance between a face position in the image information and a first region for displaying the face, so that the face image is displayed in the first region.

5. The method according to any one of claims 1 to 4, wherein the displaying prompt information on a head-up display based on the image information comprises:
displaying the prompt information on the head-up display based on the face attitude angle in the image information.

6. The method according to claim 5, wherein the displaying the prompt information on the head-up display based on the face attitude angle in the image information comprises:
determining a display angle of the prompt information based on the face attitude angle; and
displaying the prompt information on the head-up display based on the display angle.

7. The method according to any one of claims 1 to 4, wherein the displaying prompt information on a head-up display based on the image information comprises:
displaying the prompt information on the head-up display based on a line-of-sight direction of human eyes in the image information.

8. The method according to claim 7, wherein the displaying the prompt information on the head-up display based on a line-of-sight direction of human eyes in the image information comprises:
determining a display angle of the prompt information based on the line-of-sight direction of the human eyes; and
displaying the prompt information on the head-up display based on the display angle.

9. The method according to any one of claims 1 to 8, wherein the displaying prompt information on a head-up display based on the image information comprises:
determining, based on the face position in the image information, a height for displaying the prompt information on the head-up display; and
displaying the prompt information on the head-up display based on the height.

10. The method according to any one of claims 1 to 9, wherein the method is applied to a transportation means, and the transportation means comprises a central control screen; and the obtaining image information comprises: obtaining the image information captured by a camera, wherein
an angle formed by a connection line between an installation position of the camera and a preset position and a connection line between a position of the central control screen and the preset position is greater than or equal to a preset value.

11. The method according to any one of claims 1 to 10, wherein the method further comprises:
giving the user a prompt of voice information based on the image information, wherein the voice information is used to guide the user to record the facial information.

12. The method according to any one of claims 1 to 11, wherein the displaying prompt information on a head-up display based on the image information comprises:
when no face exists in the image information, giving, by using the head-up display, the user a prompt that no face is detected;
when the face in the image information is occluded, giving, by using the head-up display, the user a prompt of not occluding the face; and/or
when the face attitude angle in the image information is greater than or equal to a preset threshold, giving, by using the head-up display, the user a prompt of a direction in which the face needs to be rotated.

13. The method according to any one of claims 1 to 12, wherein the method further comprises:
performing identity authentication based on feature information of the facial information.

14. An information recording apparatus, comprising:
an obtaining unit, configured to obtain image information; and
a display unit, configured to display prompt information on a head-up display based on the image information, wherein the prompt information is used to guide a user to record facial information, wherein
the obtaining unit is further configured to obtain the facial information.

15. The apparatus according to claim 14, wherein the prompt information comprises a face image, and the face image is determined based on the image information, or the face image is a face model.

16. The apparatus according to claim 15, wherein the display unit is specifically configured to:
adjust a face in the image information based on a face attitude angle in the image information, to obtain the face image; and
display the face image on the head-up display.

17. The apparatus according to claim 15 or 16, wherein the display unit is specifically configured to:
adjust a display region of the face image based on a distance between a face position in the image information and a first region for displaying the face, so that the face image is displayed in the first region.

18. The apparatus according to any one of claims 14 to 17, wherein the display unit is specifically configured to:
display the prompt information on the head-up display based on the face attitude angle in the image information.

19. The apparatus according to claim 18, wherein the display unit is specifically configured to:
determine a display angle of the prompt information based on the face attitude angle; and
display the prompt information on the head-up display based on the display angle.

20. The apparatus according to any one of claims 14 to 17, wherein the display unit is specifically configured to:
display the prompt information on the head-up display based on a line-of-sight direction of human eyes in the image information.

21. The apparatus according to claim 20, wherein the display unit is specifically configured to:
determine a display angle of the prompt information based on the line-of-sight direction of the human eyes; and
display the prompt information on the head-up display based on the display angle.

22. The apparatus according to any one of claims 14 to 21, wherein the display unit is specifically configured to:
determine, based on the face position in the image information, a height for displaying the prompt information on the head-up display; and
display the prompt information on the head-up display based on the height.

23. The apparatus according to any one of claims 14 to 22, wherein the apparatus is located in a transportation means, the transportation means comprises a central control screen, and the obtaining unit is specifically configured to obtain the image information captured by a camera, wherein
an angle formed by a connection line between an installation position of the camera and a preset position and a connection line between a position of the central control screen and the preset position is greater than or equal to a preset value.

24. The apparatus according to any one of claims 14 to 23, wherein the apparatus further comprises:
a voice unit, configured to give the user a prompt of voice information based on the image information, wherein the voice information is used to guide the user to record the facial information.

25. The apparatus according to any one of claims 14 to 24, wherein the display unit is specifically configured to:
when no face exists in the image information, give, by using the head-up display, the user a prompt that no face is detected;
when the face in the image information is occluded, give, by using the head-up display, the user a prompt of not occluding the face; and/or
when the face attitude angle in the image information is greater than or equal to a preset threshold, give, by using the head-up display, the user a prompt of a direction in which the face needs to be rotated.

26. The apparatus according to any one of claims 14 to 25, wherein the apparatus further comprises:
an authentication unit, configured to perform identity authentication based on feature information of the facial information.

27. A face recording apparatus, wherein the apparatus comprises:
a memory, configured to store a computer program; and
a processor, configured to execute the computer program stored in the memory, so that the apparatus performs the method according to any one of claims 1 to 13.

28. A transportation means, comprising the apparatus according to any one of claims 14 to 27.

29. A computer-readable storage medium, wherein the computer-readable storage medium stores a computer program, and when the computer program is executed by a computer, the method according to any one of claims 1 to 13 is implemented.

30. A chip, wherein the chip comprises a processor and a data interface, and the processor reads, through the data interface, instructions stored in a memory, to perform the method according to any one of claims 1 to 13.
